# EUROPEAN PATENT SPECIFICATION

(11) **EP 3 766 713 B1**
(45) Date of publication and mention of the grant of the patent: **14.02.2024**
(21) Application number: 19767088.8
(22) Date of filing: 14.03.2019
(51) Int. Cl.: B60H 3/00, F24F 3/147, B60H 1/00, B60H 1/03, B60H 3/02

(54) **VEHICULAR AIR CONDITIONER**
FAHRZEUGKLIMAANLAGE
CLIMATISEUR DE VÉHICULE

(30) Priority: 15.03.2018 JP 2018048422
(43) Date of publication of application: 20.01.2021
(73) Proprietor: Marelli Cabin Comfort Japan Corporation, Saitama-shi, Saitama 331-8501 (JP)
(72) Inventor: MAEDA, Shinnosuke, Saitama-city Saitama 331-8501 (JP); KAWAI, Shiyuusuke, Saitama-city Saitama 331-8501 (JP); MARUYAMA, Tomohiro, Saitama-city Saitama 331-8501 (JP); NAKAMURA, Takashi, Saitama-city Saitama 331-8501 (JP)
(74) Representative: Louis Pöhlau Lohrentz
(86) International application number: PCT/JP2019/010685
(87) International publication number: WO 2019/177121

(56) References cited:
- EP-A1- 3 517 330
- FR-A1- 2 772 668
- JP-A- 2001 010 326
- JP-A- 2001 239 827
- JP-A- 2002 200 911
- JP-A- 2004 176 999
- JP-A- 2006 232 232
- JP-A- 2006 248 360
- JP-A- 2008 201 199
- JP-A- 2010 076 506
- JP-A- 2016 101 835
- JP-A- 2018 154 203
- US-A- 5 509 275
- US-A- 5 509 275

## Description

### TECHNICAL FIELD

The present invention relates to an air conditioner for a vehicle.

### BACKGROUND ART

JP H8-067136 A discloses an air conditioner for a vehicle that has a moisture absorption device disposed on a flow path of conditioning air. Other air conditioners for a vehicle are disclosed in US 5 509 275 A and EP 3 517 330 A1.

The moisture absorption device is configured by combining a moisture absorbent (desiccant material) with a regeneration heater.

In this moisture absorption device, a moisture in the air passing through the flow path is absorbed by the moisture absorbent and thus the air is dehumidified.

Further, when the moisture absorbent is saturated, the moisture absorbent is heated by the regeneration heater to desorb the moisture absorbed therein, and thus the moisture absorbent is reactivated.

In the air conditioner disclosed in JP H08-067136 A, the dehumidification of the air cannot be performed during the re-activation of the moisture absorbent. Thus, the dehumidification of the air cannot be performed continuously.

Here, for enabling the continuous dehumidification of the air, followings can be considered:
(a) setting an absorption area for absorbing the moisture and a desorption area for desorbing the moisture absorbed therein in the same moisture absorbent (desiccant material); and for example, (b) disposing the absorption area within the flow path of the air and disposing desorption area within the flow path of the regeneration fluid, which is a fluid for desorbing the moisture from the desiccant material.

In this case, the dehumidification of the air and the reactivation of the moisture absorbent are performed in parallel, and thus the absorbing and desorbing of moisture can be performed continuously. Here, the dehumidification of the air is performed by absorbing moisture in the air to the adsorption area. The reactivation of the moisture absorbent is performed by taking the moisture into the regeneration fluid to desorbing the moisture from the desorption area.

There is an air conditioner for a vehicle that has a plurality of flow paths for a temperature adjusted air (a conditioned air).
In this air conditioner, the supply destination of the conditioned air is switched among the plurality of paths.

Thus, the air passes through in each flow path intermittently. The dehumidification of the conditioned air is performed only when the conditioned air passes through the flow path to which desiccant material is disposed.

Here, when the temperature of the conditioned air is higher than that of the regeneration fluid, the event as follow may occur: the moisture being absorbed to the desiccant material is desorbed by the calorie of the conditioned air at the time of when the flow of the conditioned air occurs in the flow path to which the desiccant material is disposed.

In this case, the desorbed moisture is taken into the conditioned air and is supplied to the vehicle cabin.

If the flow path to which the desiccant material is disposed is a duct for defroster, for example, the air outlet of the conditioned air is opened at the underward of the lower part of the windshield glass.

If the moisture desorbed from the desiccant material is taken into the conditioned air passing through the duct for the defroster, the conditioned air with high humidity is blown onto the windshield glass, and thus causes the fogging of the windshield glass.

So, it is preferable to making that the moisture absorbed on the desiccant material is less likely to be taken into the air supplied into the vehicle cabin.

### SUMMARY OF THE INVENTION

One aspect of the present invention is an air conditioner for a vehicle according to claim 1.

According to this configuration, the moisture absorbed to the desiccant material is less likely to be taken into the air supplied into the vehicle cabin.

### BRIEF DESCRIPTION OF THE DRAWINGS

Fig.1 to Fig.3C are figures explaining the air conditioner of the first non-inventive embodiment.
Fig.4A to 4C are figures explaining the desiccant material used in the air conditioner of the first non-inventive embodiment.
Fig.5 is a figure explaining the properties the moisture absorbent which consists of organic polymer materials.
Fig.6A to 6C are figures explaining the air conditioner of the second non-inventive embodiment.
Fig.7A and 7B are figures explaining the desiccant material used in the air conditioner of the second non-inventive embodiment.
Fig.8 is a schematic figure explaining the air conditioner of the first non-inventive modification.
Fig.9 is a schematic figure explaining the air conditioner of the second non-inventive modification.
Fig.10 is a schematic figure explaining the air conditioner of the third non-inventive modification.
Fig.11 is a schematic figure explaining the air conditioner of the fourth non-inventive modification.
Fig.12A to 12C are schematic figures explaining the air conditioner of the first modification according to the invention.
Fig.13A and 13B are schematic figures explaining the air conditioner of the second modification according to the invention.
Fig.14 is a schematic figure explaining the air conditioner of the second modification according to the invention.

### DESCRIPTION OF EMBODIMENTS

### [FIRST NON-INVENTIVE EMBODIMENT]

Hereinafter, an air conditioner 1 of a first non-inventive embodiment will be explained.

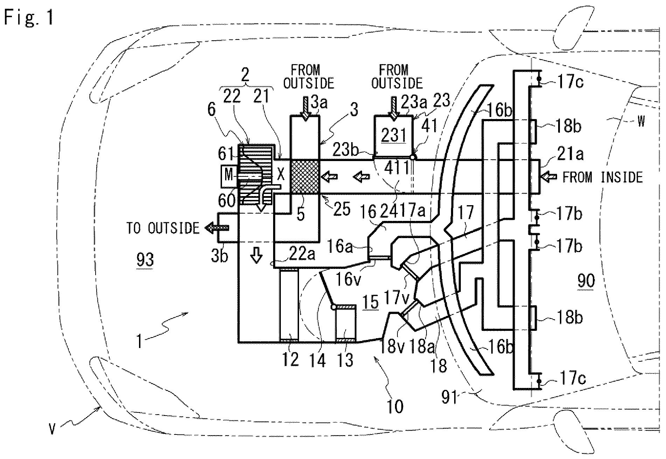

Fig.1 is a figure explaining the air conditioner 1 for a vehicle. The entire configuration of the air conditioner 1 is shown in this figure schematically.

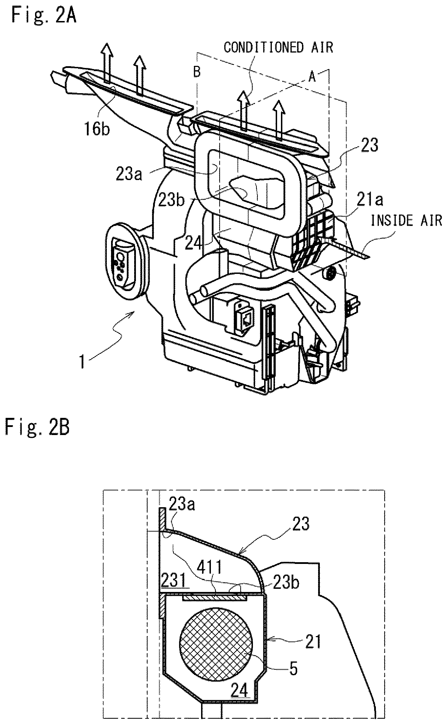

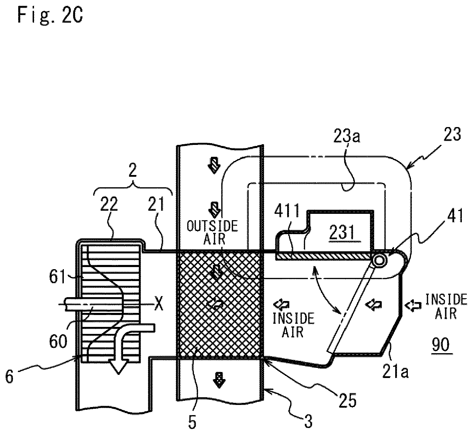

Fig.2A to Fig.2C are a figure explaining the main part of the air conditioner 1. Fig.2A is a perspective view looking the air conditioner 1 from the front-side of the vehicle. Fig.2B is a figure showing schematically the cross section of the air conditioner 1 cutting the air conditioner 1 along the plane A in Fig.2A. Fig.2C is a figure showing schematically the cross section of the air conditioner 1 cutting the air conditioner 1 along the plane B in Fig.2A.

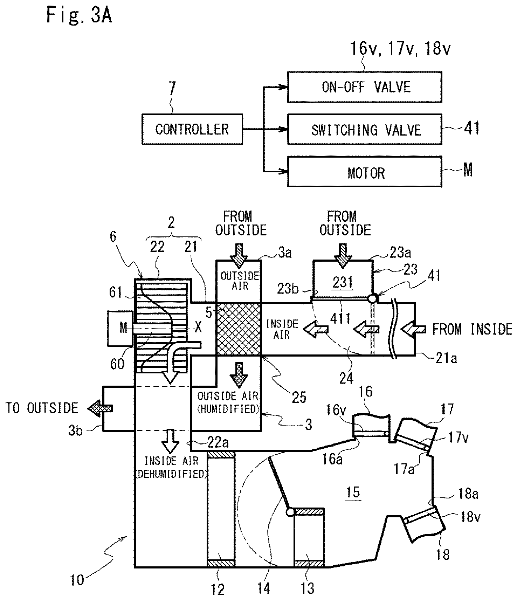

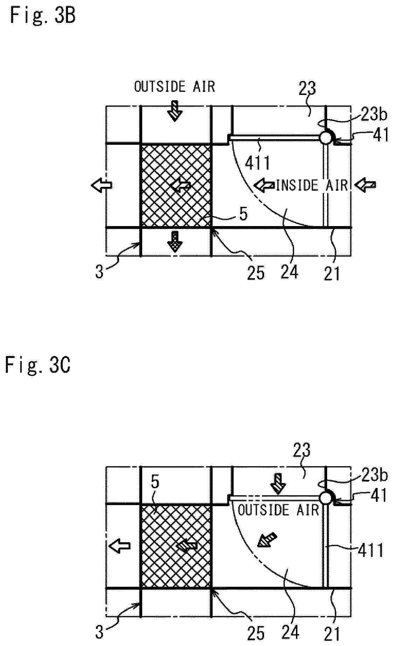

Fig.3A to Fig.3c are a figure explaining the main part of the air conditioner 1. Fig.3A is an enlarged view showing schematically the main part of the air conditioner 1. Fig.3B and Fig.3C a figure showing the relation between the position of a partition wall 411 in a switching valve 41 and the flow of air.

As shown in Fig.1, the air conditioner 1 includes a temperature adjusting unit 10. The temperature adjusting unit 10 adjusts a temperature of air and supplies the temperature adjusted air, as a conditioned air, into a vehicle cabin 90.

The temperature adjusting unit 10 includes an evaporator 12, a heater core 13, a mix door 14, and a mixing area 15.

The evaporator 12 cools the air supplied from a sirocco fan 6. A heater core 13 and a mix door 14 are provided on the downstream side of the evaporator 12.

The mix door 14 adjusts the inflow amount of the air, which is cooled by the evaporator 12, into the heater core 13 side. The heater core 13 heats the air flowing into from the evaporator 12 side.

In the air conditioner 1, the conditioned air adjusted to the target temperature is prepared by mixing in the mixing area 15 the air cooled by the evaporator 12 and the air heated by the heater core 13.

In the mixing area 15, supply ports 16a, 17a and 18a into ducts 16, 17 and 18 are opened. Here, the duct 16 is a duct for supplying the air to a defroster, the duct 17 is a duct for supplying the air to a front-side of the vehicle cabin 90, and the duct 18 is a duct for supplying the air to a floor-side of the vehicle cabin 90.

An on-off valve 16V, 17V and 18V is provided to each of supply port 16a, 17a and 18a. The actuation of each of the on-off valve 16V, 17V and 18V is controlled by a controller 7 (see Fig.3). Here, the on-off valve 16V, 17V and 18V and the controller 7 configure a supply manager for controlling a supply destination of the conditioned air.

The conditioned air adjusted the temperature thereof in the mixing area 15 is finally supplied to the vehicle cabin 90 through at least one of duct 16, 17 and 18.

The duct 16 connects an air outlet 16b to the supply port 16a. The air outlet 16b is opened in the vicinity of the lower part of a windshield glass W. The air outlet 16b has a determined length in the width direction of the vehicle such that the conditioned air exit from the air outlet 16b blow on the windshield glass W. In this non-inventive embodiment, the conditioned air blow on substantially the entire surface in the width direction of the windshield glass W.

The duct 17 connects an air outlet 17b and 17c to the supply port 17a. Each of the air outlet 17b and 17c is opened at an instrument panel 91 in the vehicle cabin 90.

The duct 18 connects an air outlet 18b to the supply port 18a. The air outlet 18b is opened in the vicinity of the floor of the vehicle cabin 90.

The air conditioner 1 has a first path 2. At least one of the air taken in from the vehicle cabin 90 through an air intake 21a (first air intake) and the air taken in from the outside of the vehicle through the air intake 23a (outside air intake) pass through the first path 2. Hereinafter, the air taken in from the vehicle cabin 90 through the air intake 21a is described as "inside air" as appropriate. . The air taken in from the outside of the vehicle through the air intake 23a is described as "outside air" as appropriate.

As shown in Fig.3A, the first path 2 has a flow path 21 and a supply path 22. The flow path 21 has the air intake 21a for air in the vehicle cabin 90 at one end thereof. The supply path 22 has a connection port 22a connected to the temperature adjusting unit 10 at one end thereof.

A rotor 61 of the sirocco fan 6 (first blower) is provided inside the supply path 22. The rotor 61 is connected to an output shaft 60 of a motor M. The rotor 61 rotates integrally around the axis X by the rotational driving force of the motor M.

When the rotor 61 of the sirocco fan 6 rotates about the axis X, air is sucked from the direction of the rotation axis (axis X) toward the rotor 61. Then, the sucked air is supplied to the radial direction of the axis X from the rotor 61. Therefore, in the first path 2, the flow path 21 is connected to the supply path 22 from the direction of the axis X. The flow path 21 is connected to the region of the supply path 22 where the rotor 61 is provided.

The air intake 21a for sucking the air in the vehicle cabin 90 is provided at one end in the longitudinal direction of the flow path 21. The supply path 22 is connected to the other end of the flow path 21.

An outside air inlet 23 is provided at middle in the longitudinal direction of the flow path 21. An air intake 23a for sucking the air outside of the vehicle is provided at the outside air inlet 23. A switching valve 41 (first valve) is provided at a junction part 24 between the flow path 21 and the outside air inlet 23. An opening 23b of the outside air inlet 23 is opened or closed by the switching valve 41(see Fig.2 and Fig.3).

A partition wall 411 of the switching valve 41 displaces between a first position for introducing the inside air (see Fig.2B, Fig.2C, Fig.3A, Fig.3B) and a second position for introducing the outside air (see Fig.3C). The displacement and positioning of the partition wall 411 is controlled by the controller 7.

When the partition wall 411 is positioned to the first position, the opening 23b of the outside air inlet 23 is closed by the partition wall 411. Thereby, the communication between the flow path 21 and the outside air inlet 23 is terminated. Thus, the inside air in the vehicle cabin 90 is sucked into the flow path 21 through the air intake 21a and is supplied to the supply path 22 through the flow path 21.

When the partition wall 411 is positioned to the second position (see Fig.3c), the inflow of the inside air into the flow path 21 through the air intake 21a is blocked; and the inflow of the outside air into the flow path 21 through the air intake 23a is allowed. Thus, the outside air of the vehicle is sucked into the outside air inlet 23 through the air intake 23a and is supplied to the supply path 22 through the flow path 21.

In this non-inventive embodiment, the partition wall 411 sometimes may be placed to the position at the middle between the first position and the second position. In this case, both of the air in the vehicle cabin 90 (inside air) and the air outside of the vehicle (outside air) are supplied to the supply path 22.

A second path 3 is provided across the flow path 21. The second path 3 across the region of the flow path 21 where between the supply path 22 and the outside air inlet 23. At the region where the flow path 21 and the second path 3 across each other, the second path 3 is disposed almost orthogonal to the flow path 21. One end of the second path 3 is an air intake 3a (second air intake) for the outside air, and the other end of the second path 3 is an air outlet 3b of the outside air.

The second path 3 is provided with a blower (second blower: not shown). When the blower is turned on by the controller 7, the outside air is sucked into the second path 3 through the air intake 3a. Then, the outside air sucked into the second path 3 flows toward the air outlet 3b from the air intake 3a.

A desiccant material 5 is provided in an intersection region 25 where the flow path 21 and the second path 3 across each other. The desiccant material 5 in the flow path 21 is disposed in a region where an air constantly flows during the air conditioner 1 is in operation.

When the sirocco fan 6 is turned on due to in operation of the air conditioner 1, at least one of the inside air sucked from the vehicle cabin 90 and the outside air sucked from the outside of the vehicle passes through the intersection region 25.

As shown in Fig.1, for example, the air intake 3a of the second path 3 is opened toward the outside of the vehicle. The air (outside air) sucked into the second path 3 through the air intake 3a is low in temperature and low in the humidity (i.e. low in the absolute humidity) in case of the winter season for example.

The air intake 21a of the first path 2 is opened inside the vehicle cabin 90. The air (inside air) sucked into the first path 2 through the air intake 21a is the air in the vehicle cabin 90. The air (inside air) sucked into the first path 2 is high in the humidity (i.e. high in absolute humidity) in case of the winter season for example.

In this non-inventive embodiment, the controller 7 of the air conditioner 1 controls the operations of the motor M, the switching valve 41 and the on-off valve 16V, 17V and 18V in accordance with the operation mode of the air conditioner 1.

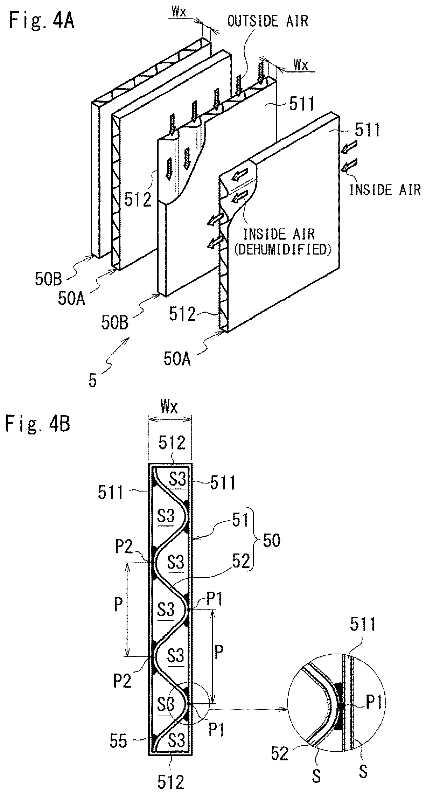

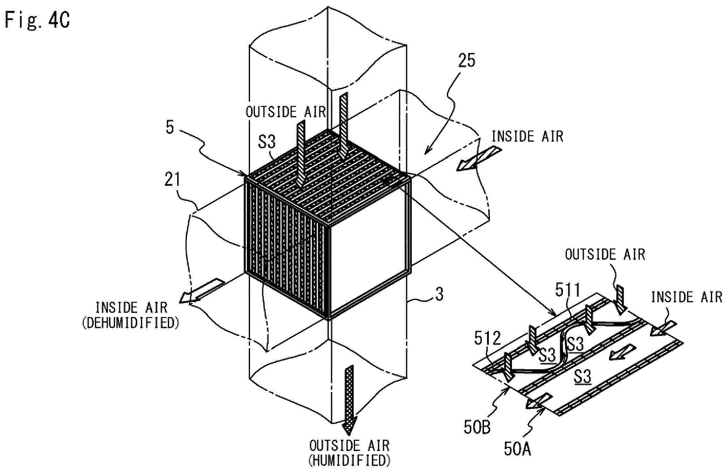

Fig.4A to Fig.4C are figures each explaining the desiccant material 5. Fig 4A is an exploded perspective view for explaining the location of base part 50(50A and 50B) with tubular shaped each configuring the desiccant material 5. Fig.4B is plain view for explaining the configuration of the base part 50(50A and 50B) of the desiccant material 5 when looking the base part 50(50A and 50B) from the flow direction of the air. Fig 4C is a figure explaining the location and the function of the desiccant material 5.

As shown in Fig.4C, the intersection region 25 is a region where the flow path 21 of the first path 2 across the second path 3.
At the intersection region 25, a flow direction of the air passing through the flow path 21 and a flow direction of the air passing through the second path 3 are orthogonal each other.

As shown in FIG.4A, the desiccant material 5 is formed by stacking alternately the base part 50A and the base part 50B. Here, the air flowing in the flow path 21 passes through the inside of the base part 50A. Also, the air flowing in the second path 3 passes through the inside of the base part 50B.

The basic configuration of the base part 50A and the base part 50B is the same. So, in the following explanation, the explanation will be made using "base part 50" when it is not required to distinguish the base part 50A and the base part 50B.

As shown in Fig.4B, the base part 50 has a tube-shaped part 51 and a wave-shaped part 52. The tube-shaped part 51 has a rectangular shape in a cross-sectional view. The wave-shaped part 52 is disposed between side portions 511 and 511 of the tube-shaped part 51. Side portions 511 and 511 are in parallel each other and are the longer side wall of four side walls of the tube-shaped part 51.

The tube-shaped part 51 is formed from side portions 511 and 511 and side portions 512 and 512. The tube-shaped part 51 is formed in the tube-like shape when viewing from the flow direction of the air. In the tube-shaped part 51, side portions 511 and 511 are disposed in parallel each other with an interval Wx.

Side portions 512 and 512 are the shorter side wall of four side walls of the tube-shaped part 51. Side portions 512 and 512 are respectively connecting the ends of side portions 511 and 511 each other.

The wave-shaped part 52 is disposed such that the wave-shaped part 52 alternately contacts with the side portion 511 of one side and the side portion 511 of the other side. Each of the contact point P1, P2 between the wave-shaped part 52 and the side portion 511 are adhered by the adhesive 55.

The distance P between contact points P1 and P1 is substantially the same as the distance P between contact points P2 and P2. Here, the contact point P1 is the contact point between the wave-shaped part 52 and the side portion 511 of one side. The contact point P2 is the contact point between the wave-shaped part 52 and the side portion 511 of the other side.

The base part 50 has a plurality of space S3 each having substantially the same cross-sectional area. Each of the space S3 is formed inside of the tube-shaped part 51, and is surrounded by the tube-shaped part 51 and the wave-shaped part 52.

In this non-inventive embodiment, each of the space S3 functions as a flow path S3 through which air passes through. Hereinafter, the space S3 is also referred to as a flow path S3.

The desiccant material 5 is formed by stacking alternately the base part 50A and the base part 50B. In the adjacent base part 50A and the base part 50B, the side portion 511 of the base part 50A and the side portion 511 of the base part 50B are in contact with each other over the entire surface.

In the desiccant material 5 of this non-inventive embodiment, the base part 50A is disposed such that opening of the flow path S3 is directed to the flow direction of the air passing through the flow path 21. Also, the base part 50B is disposed such that opening of the flow path S3 is directed to the flow direction of the air passing through the second path 3.

In the desiccant material 5, the base part 50A and the base part 50B are stacked alternately in the stacking direction. The flow path S3 of the base part 50A and the flow path S3 of the base part 50B are orthogonal to each other.

In this non-inventive embodiment, the base part 50 (the tube-shaped part 51 and the wave-shaped part 52) that constitutes the desiccant material 5 is formed by using a material capable of absorb and desorb of moisture. A paper, non-woven fabric or the like are the example of such material.

Here, it is preferable that a material capable of absorb and desorb of moisture is doped on the tube-shaped part 51 and the wave-shaped part 52 for improving the efficiency of absorption and desorption. A high-molecular absorbent, an inorganic absorbent or the like are the example of such material.

In case of FIG.4B, a layer of the moisture absorbent S is formed on each of the surface of the tube-shaped part 51 and the wave-shaped part 52 is shown as an example. This layer is formed by doping the moisture absorbent S on the surface of the tube-shaped part 51 and the wave-shaped part 52. Here, the surface of the tube-shaped part 51 and the wave-shaped part 52 is a contact surface with the air (outside air and inside air).

It is not required to dope all the moisture absorbent S on the surface of the tube-shaped part 51 and the wave-shaped part 52. At least some of the moisture absorbent S may be impregnated into the tube-shaped part 51 and the wave-shaped part 52.

Here, the term "moisture absorbent" in this specification means not only the material such as an organic polymer material or inorganic material having a property of retaining (absorbing) moisture and absorbing moisture on the surface thereof. A material capable of holding moisture inside it may be incorporated in the term "moisture absorbent ".

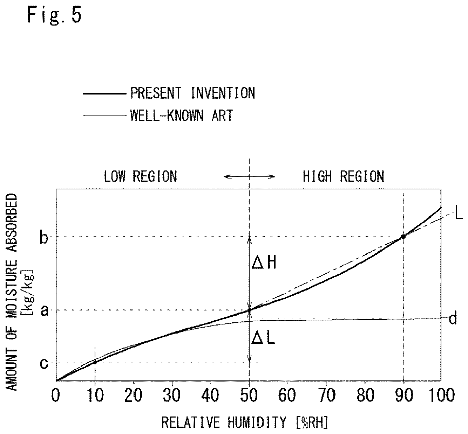

In this non-inventive embodiment, an organic polymer material having the following properties is used as the absorbent.
(a) The degree ΔH of change in moisture absorption in a region where the relative humidity is high (region where the relative humidity is 50% or more) is higher than the degree ΔL of change in moisture absorption in a region where the relative humidity is low (region where the relative humidity is less than 50%). See FIG. 5
(b) The moisture absorption increases as the relative humidity increases; and the rate of increase in the moisture absorption in the region where the relative humidity is high does not decrease (saturate) even when the relative humidity increases.

Here, the term "relative humidity" in this specification is used when explaining the properties of the moisture absorbent. When simply describing as "humidity", this term means absolute humidity.

The operation of the air conditioner 1 having above described configuration will be made.

In case where the air conditioning of the vehicle cabin 90 of the vehicle (see Fig.1) is performed without taking in the outside air will be explained. In this case, the air conditioner 1 sucks therein the inside air from the vehicle cabin 90, and making the temperature adjustment of the sucked inside air. Then, the temperature adjusted air is circulated into the vehicle cabin 90 as a conditioned air.

Therefore, the humidity of the circulated air (conditioned air) increases with time according to the situation in the vehicle cabin and the like.

If the conditioned air with high humidity is circulated into the vehicle cabin 90, the fogging of the windshield glass W may be occurred. The air conditioner 1 has a desiccant mode for dehumidifying the air sucked from the vehicle cabin 90 as one of a plurality of operation modes for the air conditioner 1.

Hereinafter, the explanation will be made regarding when the operation mode of the air conditioner 1 is a desiccant mode.

In this desiccant mode, the air (inside air) is sucked from the vehicle cabin 90, and the dehumidification of the sucked inside air is performed by absorbing a moisture contained in the inside air to the desiccant material 5. Also, the desorbing of the moisture from the desiccant material 5 is performed in parallel to the dehumidification by using the outside air sucked from outside of the vehicle. Thereby, the absorbing and desorbing of moisture at the desiccant material can be performed continuously.

### <DESICCANT MODE>

As shown in Fig.3A, when performing the desiccant mode, the partition wall 411 of the switching valve 41 is positioned to the first position for sucking the inside air. Thereby, the communication between the flow path 21 and the outside air inlet 23 is terminated. Thus, only the inside air sucked into the flow path 21 through the air intake 21a can flow in the flow path 21.

Then, the controller 7 rotates the rotor 61 of the sirocco fan 6 about the axis X by operating the motor M. Thereby, the inside air in the vehicle cabin 90 is sucked through the air intake 21a into the flow path 21 positioning upstream of the rotor 61.

The controller 7 actuates the blower (not shown). Thereby, the outside air is sucked into the second path 3, and the flow of sucked air from the air intake 3a to the air outlet 3b is caused in the second path 2.

The air sucked in the flow path 21 passes through the intersection region 25 of the flow path 21, and then fed to the supply path 22 at downstream of the rotor 61. The air sucked in the second path 3 passes through the intersection region 25 with regard to the flow path 21, and then exhausted from the air outlet 3b at the other end of the second path 3.

In the flow path 21 and the second path 3, the desiccant material 5 is disposed at the intersection region 25 where the flow path 21 and the second path 3 orthogonal each other.

The desiccant material 5 is disposed across the path for the air (inside air) passing through the flow path 21 and the path for the air (outside air) passing through the second path 3.

Here, the desiccant mode is performed in following case:
when the air passing through the flow path 21 is the air sucked from the vehicle cabin 90 and high in humidity; and
when the air passing through the second path 3 is the air sucked from the outside of the vehicle and low in humidity.

As described above, in the base part 50A of the desiccant material 5, the air (inside air) sucked from the vehicle cabin 90 passes through the flow path S3 surrounded by the tube-shaped part 51 and the wave-shaped part 52.

The tube-shaped part 51 and the wave-shaped part 52 is formed by using a material capable of absorb and desorb of moisture. A paper, non-woven fabric or the like are the example of such material.

Furthermore, the moisture absorbent S capable of absorb and desorb of moisture is doped on or impregnated into the tube-shaped part 51 and the wave-shaped part 52.

When the air (inside air) sucked from the vehicle cabin 90 passes through the base part 50A, the moisture in the air (inside air) sucked from the vehicle cabin 90 is absorbed to the tube-shaped part 51, the wave-shaped part 52 and the moisture absorbent S. Thereby the air (inside air) sucked from the vehicle cabin 90 is dehumidified (see Fig.3B)).

On the other hand, in the base part 50B of the desiccant material 5, the air (outside air) sucked from outside of the vehicle passes through the flow path S3 surrounded by the tube-shaped part 51 and the wave-shaped part 52.

The tube-shaped part 51 and the wave-shaped part 52 of the base part 50B is also formed by using a material capable of absorb and desorb of moisture. A non-woven fabric or the like are the example of such material.

Furthermore, the moisture absorbent S capable of absorb and desorb of moisture is doped on or impregnated into the tube-shaped part 51 and the wave-shaped part 52.

As described above, when performing the desiccant mode, the air (outside air) sucked from the outside of the vehicle is the air in low humidity. In this non-inventive embodiment, the air (outside air) passing through the second path 3 is used as a regeneration fluid for desorbing moisture from the desiccant material 5 during the operation of the desiccant mode.

Here, the regeneration fluid is at least air in low humidity. When the regeneration fluid (regeneration air) passes through the base part 50B, the moisture absorbed on the tube-shaped part 51, the wave-shaped part 52 and the moisture absorbent S is desorbed from the tube-shaped part 51, the wave-shaped part 52 and the moisture absorbent S.

Thereby moisture is desorbed from the region of the desiccant material 5 where in contact with the regeneration fluid. Thus the desiccant material 5 is activated.

In the desiccant material 5, the base part 50A is higher in the amount in absorb of moisture becomes than the base part 50B. This causing a phenomenon that making uniform the water distribution in the entire desiccant material 5. Thus, the moisture in the base part 50A is moved to the base part 50B adjacent to the base part 50A.

Here, the moisture absorbed to the moisture absorbent S is capable of moving the surface and inside of the moisture absorbent S. The moisture absorbed to the moisture absorbent S is also moved from the base part 50A to the base part 50B like moisture absorbed to the tube-shaped part 51 and the wave-shaped part 52.

As shown in Fig.4A and Fig.4c, in the desiccant material 5, the base part 50A through which inside air passes through and the base part 50B through which outside air passes through are disposed in the following manner.

The side portion 511 of the base part 50A and the side portion 511 of the base part 50B are disposed in contact with each other. Therefore, the moisture absorbed to the side part 511 of the base part 50A moves quickly to the side part 511 of the base part 50B adjacent to the side part 511 of the base part 50A (see enlarged of Fig.4C).

In the base part 50A, the wave-shaped part 52 is disposed inside of the tube-shaped part 51.

The wave-shaped part 52 is disposed such that the wave-shaped part 52 alternately contacts with the side portion 511 of one side and the side portion 511 of the other side.

The moisture absorbed to the wave-shaped part 52 moves to the side portion 511 of the tube-shaped part 51, and then moved to the base part 50B through which outside air passes through (see enlarged view of Fig.4C).

By disposing the wave-shaped part 52 inside of the tube-shaped part 51, increasing the contact area with inside air is possible. This enables the absorbing of the moisture in the inside air and thus the dehumidification of the air (inside air) from the vehicle cabin 90 can be achieved.

Thus, (1) the moisture removed from inside air of the vehicle cabin 90 and absorbed to the base part 50A is move to the base part 50B where the amount of the moisture is lower than the base part 50A. Then, (2) the moisture moved to the base part 50B is taken into the air (outside air: regeneration fluid) passing through the base part 50B.

Thereby, while inside air and outside air are continuously passing through the first path 2 and the second path 3 respectively, the base part 50B is always kept low in the amount of the moisture than the base part 50A.

As a result, the moisture absorbed to the base part 50A of the desiccant material 5 always moves to the base part 50B, and thus the saturation of the absorb of the moisture at the base part 50A can be prevented. Therefore, the reactivation of the desiccant material due to the saturation in absorb of the moisture like the conventional desiccant material is not required. That is, continuous dehumidification of air is enabled by continuously passing through the regeneration fluid.

Thereby, the humidity of the conditioned air to be supplied to the vehicle cabin 90 can be decreased when circulating the air (inside air) sucked from the vehicle cabin 90 and in the vehicle cabin 90 after adjusting the temperature of the air.

Here, it is not required that all of the air passing through the base part 50A is the air (inside air) sucked from the vehicle cabin 90 through the air intake 21a in case of the desiccant mode.

The air passing through the base part 50A may include the outside air sucked from outside of the vehicle through the outside air inlet 23 in addition to the inside air.

In this non-inventive embodiment, intersection region 25 where the desiccant material 5 is disposed is established to the region where an air constantly flows during the air conditioner 1 is in operation.

In this region, at least one of the inside air and the outside air constantly flows during the air conditioner 1 is in operation under the desiccant mode.

If the desiccant material 5 is disposed to the region where an air intermittently flows during the air conditioner 1 is in operation, the following situation may occur.
(a) the difference in temperature may occur between the desiccant material 5 and the air (inside air) to be dehumidified, when air (inside air) do not flow the region where the desiccant material 5 is disposed.

For example, if the air (inside air) to be dehumidified is supplied to the region where the desiccant material 5 is disposed and the temperature of the desiccant material 5 is lower than the air (inside air) to be dehumidified, the desiccant material 5 is warmed by the air to be supplied. In this case, the desorbing of the moisture being absorbed to the desiccant material 5 may occur.

If desorb of the moisture occurs, the moisture desorbed from the desiccant material 5 may be taken into the air (inside air). This case resulting in that the air, i.e. inside air to be dehumidified, is humidified.

In this case, the humidified air (humidified inside air) is supplied to the vehicle cabin 90 instead of the dehumidified air, and the humidity in the vehicle cabin 90 becomes high temporarily. This may cause the fogging of the windshield glass W.

In this non-inventive embodiment, the desiccant material 5 is disposed to the region where air (at least one of inside air and the outside air) constantly flows during the air conditioner 1 is in operation.

When the air conditioner 1 is in operation under the desiccant mode: the outside air passes through the region disposed in the second path 3 of the desiccant material 5; and the air to be dehumidification, i.e. at least one the inside air and the outside air, passes through the region disposed in the flow path 21 of the desiccant material 5.

The temperature of the desiccant material 5 is kept at about middle between the temperature of the outside air and the temperature of the air to be dehumidified. Thereby, the difference in temperature between the temperature of the outside air and the temperature of the air to be dehumidified becomes small. This result in that: the moisture absorbed on the desiccant material 5 is less likely to be taken into the air supplied into the vehicle cabin 90 through the desiccant material 5; and that the humidified air (inside air) is being less likely to be supplied into the vehicle interior 90 where the dehumidified air (inside air) should be supplied.

In the desiccant mode, the air (inside air) sucked from the vehicle cabin 90 passes through the first path 2, and the air (outside air) sucked from the outside of the vehicle passes through the second path 3.

In the desiccant mode often performed in winter season of temperature outside of the vehicle is low, the inside air passing through the first path 2 is high in the temperature and in the humidity (absolute humidity) than the outside air passing through the second path 3.

Therefore, the inside air which is high in the temperature and in the humidity, and the outside air which is low in the temperature and in the humidity are supplied to the desiccant material 5.

In the desiccant material 5, the exchange of moisture between the inside air high in temperature and humidity and the outside air low in temperature and humidity at the temperature around middle between the temperature of the inside air and the temperature of the outside air.

For example, when the inside air has a temperature of 20-25 degrees and a relative humidity of 30-50%, and the outside air has a temperature of 0-10 degrees and a relative humidity of 50-100%, the absorb and desorb of moisture is performed at a temperature approximately in the middle temperature between the outside air and the inside air.

Changing in the temperature of the outside air and the inside air causing the change in the relative humidity of the outside air and the inside air. The relative humidity of the inside air becomes high as the temperature thereof becomes low. The relative humidity of the outside air becomes low as the temperature thereof becomes high.

For example, when the temperature of the inside air decreases to an intermediate temperature, the relative humidity of the inside air rises to about 90%. When the temperature of the outside air increases to an intermediate temperature, the relative humidity of the outside air decreases to about 50%.

In the desiccant mode performed in winter season where temperature outside of the vehicle is low, the dehumidification of the air (inside air) is performed in the region where the relative humidity is high.

Therefore, it is preferable that the moisture absorbent S doped on or impregnated into the desiccant material 5 has a following property. That is, the amount of the moisture can be absorbed is high and making it possible large amount of moisture is movable, in a region where the relative humidity is high.

In this non-inventive embodiment, the desiccant material S is doped with the moisture absorbent S which is capable of absorbing large amount of moisture and enabling the large amount of moisture is movable in the desiccant mode performed in winter season where temperature outside of the vehicle is low.

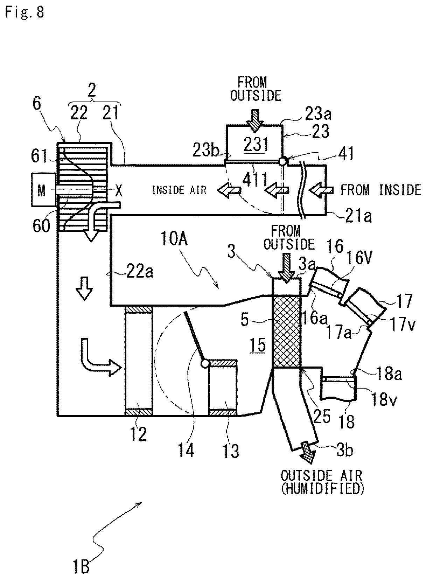

Fig.5 is a figure explaining the property of the absorbent which consists of organic polymer materials. In Fig.8, the horizontal axis represents relative humidity (% RH) and the vertical axis represents the amount of moisture to be absorbed (kg / kg). In Fig.8, the property of the absorbent are shown in relation to relative humidity and the amount of the moisture absorption.

In this non-inventive embodiment, the moisture absorbent S having following properties is used:
(a) The degree ΔH of change in amount of the moisture to be absorbed in a region where relative humidity is high (region where the relative humidity of 50% or more) is higher than the degree ΔL of change in amount of moisture to be absorbed in a region where the relative humidity is low (region where the relative humidity is less than 50%). See Fig.5.
(b) The amount of moisture to be absorbed increases as the relative humidity increases; and the rate of increase in the amount of moisture to be absorbed in the region where the relative humidity is high does not decrease (saturate) even when the relative humidity increases.
(c) The degree ΔH of the change in the moisture absorption amount in a region where relative humidity is high (region where the relative humidity of 50% or more) is at least 1.2 times larger than the degree ΔL of the change in moisture absorption in a region where the relative humidity is low (region where the relative humidity is less than 50%). See Fig.5.

In this non-inventive embodiment, lower limit of the ratio (ΔH / ΔL) is determined to 1.2 so that moisture in the air with high relative humidity is appropriately absorbed at the desiccant mode performed in winter season of temperature outside of the vehicle is low. Here, (ΔH / ΔL) is the ratio of the change in amount of the moisture to be absorbed in a region where relative humidity is high and change in amount of moisture to be absorbed in a region where the relative humidity is low.

In case of well-known inorganic absorbent, e.g., zeolite, the amount of moisture absorbed to the inorganic absorbent is saturated when the relative humidity exceeds 50%.

As shown in Fig.5, for example, the characteristic line of the well-known absorbent approaches to the theoretical maximum value d of the amount of moisture absorb as the relative humidity increases. The amount of change in moisture absorb changes greatly until the relative humidity reaches approximately 50%, but the amount of change becomes small, i.e., saturated, when the amount exceeds 50%.

Therefore, the well-known inorganic absorbent reach a peak in the amount of the moisture absorb at the region where the relative humidity is high. This region is required at the desiccant mode in winter season, and the desiccant material 5 cannot fully exhibit the hygroscopic performance at such situation.

In this non-inventive embodiment, a region having a relative humidity of 50% or more that cannot be handled by a well-known inorganic absorbent is set as a region having a high relative humidity.

Also, a region having a relative humidity of below 50% that can be handled by a well-known inorganic absorbent is set as a region having a low relative humidity.

In this non-inventive embodiment, the moisture absorbent S consists of organic polymer materials is used as an absorbent to be doped to the desiccant material 5.

As shown in Fig.5, this moisture absorbent S having a property that the absorption amount of the moisture increase as relative humidity becomes high.

The moisture absorbent S has a property that: the improvement capacity in the moisture absorption amount in a region where the relative humidity is 50% or more (high humidity region) is higher than that of in a region where the relative humidity is less than 50% (low humidity region). That is, the improvement capacity in the amount ΔH of change in the moisture absorb in the high humidity region is higher than the improvement capacity in the amount ΔL of change in the low humidity region (ΔH > ΔL).

Also, the moisture absorbent S has a property that: the amount of moisture absorb constantly increases until the relative humidity reaches 90%, for example, at least in the range (relative humidity range) of 50% to 90% relative humidity in the high humidity region.

For example, the amount in the moisture absorb of the moisture absorbent S in this relative humidity range is located on the lower side in the moisture absorb than the straight line L. The straight line L is a line connecting the amount a in the moisture absorb at a relative humidity of 50% and the amount b in the moisture absorb at a relative humidity of 90%. In addition, the amount in the moisture absorb of the moisture absorbent S higher than the amount a in the moisture absorb at a relative humidity of 50%.

The moisture absorbent S having these properties may be consist of one absorbent and may be a mixture by mixing a plurality of different types of moisture absorbent of in an arbitrary ratio. Also, in case of the moisture absorbent of polymer material, this moisture absorbent can exhibit a desired amount in the moisture absorb for each relative humidity ranges by changing the type and ratio of substituents and the length of the polymer main chain.

In this case, the absorbent obtained by bundling a plurality of polymer main-chains and connecting the bundled polymer main-chains at cross-linking points set in a plurality of positions in the longitudinal direction may be used. The region between adjacent cross-linking points of this absorbent is extendable in a radial direction and is capable of accommodating a moisture within the extendable region.

As an operation mode of the air conditioner 1, a mixing mode, an outside air mode and inside air mode is establish in addition to the desiccant mode.

### <MIXING MODE>

In mixing mode, the partition wall 411 of the switching valve 41 is placed to the position where both of inside air and outside air flow into the intersection region 25. Here, inside air is air sucked from the vehicle cabin 90 through the air intake 21a of the flow path 21. Outside air is air sucked from the air intake 23a.

During the operation in the mixing mode, the controller 7 does not turn on the blower (not shown) disposed to the second path 3. Thus, since outside air being functioned as a regeneration fluid do not pass through the second path 3, the air (inside air and outside air) sucked into the flow path 21 is supplied to the temperature adjusting unit 10 without being dehumidified.

### <OUTSIDE AIR MODE>

In the outside air mode, the partition wall 411 of the switching valve 41 is placed to the second position (see Fig.3C) .

During the operation in the outside air mode, the controller 7 does not turn on the blower (not shown) disposed to the second path 3. Thus, outside air being functioned as a regeneration fluid do not pass through the second path 3. Thereby, the air (outside air) sucked into the first path 2 is supplied to the temperature adjusting unit 10 without being dehumidified.

### <INSIDE AIR MODE>

In the inside air mode, the partition wall 411 of the switching valve 41 is placed to the first position (see Fig.3A and Fig.3B) .

During the operation in the inside air mode, the controller 7 does not turn on the blower (not shown) disposed to the second path 3. Thus, outside air being functioned as a regeneration fluid do not pass through the second path 3. Thereby, the air (inside air) sucked into the flow path 21 is supplied to the temperature adjusting unit 10 without being dehumidified.

As described above, the desiccant material 5 is disposed at the region where air constantly flows during the air conditioner is in operation. Therefore, the problems when the desiccant material 5 is disposed to the region where an air intermittently flows can be suppressed. That is, it is possible to suitably suppress the occurrence of a situation where moisture desorbed from the desiccant material 5 is taken into the air supplied to the temperature control unit 10 and the air supplied to the temperature control unit 10 is humidified.

As described above, the air conditioner 1 for a vehicle of the first non-inventive embodiment has a following configurations. (1) The air conditioner 1 has: a first path 2 through which an air taken in through the air intake 21 (a first air intake) flows therein; a second path 3 through which an outside air taken in through the air intake 3a (an outside air intake) flows therein, and the outside air is an air outside of a vehicle V; and the desiccant material 5 disposed across the first path 2 and the second path 3.

In the air conditioner 1, the outside air flows through the second path 3 as a regeneration fluid for the desiccant material 5. The desiccant material 5 in the first path 2 is disposed in the region where an air to be dehumidified constantly flows during the air conditioner 1 is in operation. More preferably, the desiccant material 5 in the first path 2 is disposed in the region where an air constantly flows when dehumidifying the air flowing through the first path 2.

The first path 2 is provided with a sirocco fan 6 (a first blower) and the switching valve 41(a first valve).

The sirocco fan 6 supplies the air taken in through the air intake 21a toward the supply port 16a, 17a and 18a to the vehicle cabin 90. The switching valve 14 is disposed upstream of the sirocco fan 6. The switching valve 14 determines the air flows into the first path 2 from among the inside air and the outside air. The inside air is an air in the vehicle cabin 90 and the outside air is an air in the outside of the vehicle V.

According to this configuration, the air to be dehumidified constantly flows the region being disposed in the second path 3 of the desiccant material 5 when the operation mode of the air conditioner 1 is the desiccant mode for dehumidifying the air flowing through the first path 2. Thus, the temperature of the region in the first path 2 of the desiccant material 5 is kept at the temperature in accordance with the air passing through the first path 2.

In case that the desiccant material is disposed at the region where the air intermittently flow, the moisture absorbed to the desiccant material may be desorbed from the desiccant material due to temperature difference between the desiccant material and air flowing intermittently.

By adopting the above configuration, the occurrence of such phenomenon can be suppressed. Thereby, it is possible to suitably prevent the occurrence of a situation where the air to be dehumidified is temporarily humidified and supplied from the supply port into the vehicle cabin 90.

(2) The air conditioner 1 has a following configuration:
The temperature adjusting unit 10 is disposed to the first path 2. The temperature adjusting unit 10 controls the temperature of the air flows in the first path 2. In the first path 2, the desiccant material 5 is disposed at the intersection region 25 which is located air intake 21a side than the temperature adjusting unit 10.

As described above, the desiccant material 5 is disposed across the first path 2 and the second path 3. The air flowing the first path 2 and the air flowing the second path 3 are heat exchangeable through the desiccant material 5. In case of winter season, for example, the following circumference may occur, when the desiccant material 5 is disposed downstream of the temperature adjusting unit 10. The heat of the air, which is warmed in the temperature adjusting unit 10 for supplying into the vehicle cabin 90, is taken away by the heat exchange in the desiccant material 5 prior to the supply to the vehicle cabin 90.

That is, if the desiccant material 5 is disposed in the duct 16, 17 and 18 which extending from the supply ports 16a, 17a and 18a, the heat of the conditioned air is taken away.

In this case, it is required to warm the air to a higher temperature in anticipation of the amount of heat taken away by the desiccant material 5. Thus, the load on the temperature control unit 10 increases and the heating efficiency becomes worse.

When the desiccant material 5 is disposed upstream of the temperature adjusting unit 10, the heat is taken away from the air before adjusting the temperature, but the load to the temperature adjusting unit 10 can be reduced. Thereby the improvement of the heating efficiency is expected. Therefore, the desiccant material 5 may be disposed at the intersection region with the second flow path 3 provided in the air passage 22.

(3) The air conditioner 1 has a following configuration:
In the flow path 21 of the first path 2, an outside air inlet 23 is connected to the upstream side (the air intake 21 side) of the intersection region 25, and the outside air inlet 23 has an air intake 23a (an outside air intake) for sucking the air outside of the vehicle; the switching valve 41 is provided at the junction part 24 between the flow path 21 and the outside air inlet 23, and the opening 23b of the outside air inlet 23 is opened or closed by the switching valve 41.

The air flows through the intersection region 25 of the flow path 21 is determined from among the air sucked from the vehicle cabin 90 through the air intake 21a and the air sucked from outside of vehicle V through the air intake 23a by the switching valve 41.

The air flows in the first path 2 is dehumidified when the air conditioner 1 is operated in the desiccant mode for dehumidifying the air to be supplied to the vehicle cabin 90. In this case, from among the air sucked from outside of the vehicle and the air sucked from inside of the vehicle, at least the air sucked from inside of the vehicle passes through the first path 2.

According to this configuration, the air sucked into the flow path 21 through the air intake 21a from the vehicle cabin 90 is circulated into the vehicle cabin 90 after the dehumidification.

Since the air after the dehumidification can be returned into the vehicle cabin 90, keeping the temperature and humidity in the vehicle cabin 90 at appropriate temperatures and humidity is enabled.

When the air (outside air) outside of the vehicle is sucked into the flow path 21 through the air intake 23a, the air inside of the vehicle cabin 90 is pushed out to the outside of the vehicle by the amount of air taken into from outside of the vehicle. Thereby, the ventilation of the vehicle cabin 90 can be appropriately made while preventing the moisture absorbed to the desiccant material 5 taken into the air to be supplied to the vehicle cabin 90.

(4) The air conditioner 1 has a following configuration:
The desiccant material 5 is disposed across the flow path 21 and the second path 3 at the intersection region 25 between the flow path 21 and the second path 3; and the flow path 21 is part of the first path 2.

According to this configuration, the space for providing the desiccant material 5 is smaller than that of when the desiccant material 5 is disposed at the region where the first path 2 and the second path 3 are disposed with their walls in contact with each other. The flexibility in the location of the desiccant material 5 is improved.

(5) The air conditioner 1 has a following configuration:
the desiccant material 5 is formed by stacking alternately the base part 50A and the base part 50B; in the adjacent base part 50A and 50B, the side portions 511 of the base part 50A and the side portion 511 of the base part 50B are in contact with each other over the entire surface; in the desiccant material 5, the base part 50A is disposed such that opening of the flow path S3 is directed to the flow direction of the air passing through the flow path 21; the base part 50B is disposed such that opening of the flow path S3 is directed to the flow direction of the air passing through the second path 3; In the desiccant material 5, the base part 50A and the base part 50B are stacked alternately in a stacking direction; and the flow path S3 of the base part 50A and the flow path S3 of the base part 50B are orthogonal to each other.

According to this configuration, when the moisture in the air passes through the flow path 21 is absorbed to the base part 50A, the absorbed moisture moves quickly to the adjacent base part 50B. Then, the moved moisture is taken into the air (regeneration fluid) passes through the second path 3. Thereby the dehumidification of the air passed through the flow path 21 can be performed without causing the saturation in the adsorption of the moisture.

In the above described first non-inventive embodiment, it is disclosed as example that in the first path 2, the desiccant material 5 is provided at the region between the air intake 21a and supply ports 16a, 17a and 18 are provided.

Also, it is disclosed that the desiccant material 5 is disposed in the region where an air to be dehumidified constantly flows during the air conditioner 1 is in operation. More preferably, the desiccant material 5 is disposed in the region where an air constantly flows when the dehumidification of the air passing through the first path 2 is performed.

The region to which the desiccant material 5 is disposed may be the region where the air do not pass through during when the dehumidification of the air sucked into the first path 2 is not performed.

For example, the detour that bypasses the intersection area 25 may be provided to the configuration of Fig.3A. In this case the air conditioner having the following configuration can be used: the sucked air passes through the intersection region 25 when performing the dehumidification of the air; and the sucked air passes through the detour so as not to pass the intersection region 25 when not performing the dehumidification.

(6) The air conditioner 1 has a following configuration:
The desiccant material has a moisture absorbent S (absorbent) capable of absorb and desorb of moisture; and the moisture absorbent S has a following properties. That is, the degree ΔH of the change in the moisture absorption amount in a region where relative humidity is high is larger than the degree ΔL of the change in moisture absorption in a region where the relative humidity is low.

In the first path 2, the air passes through the region upstream side (the air intake 21 side) of the heater core 13 of the temperature adjusting unit 10 when the operation mode of the air conditioner 1 is the desiccant mode. The air passes through this region is the air sucked from vehicle cabin 90 and high in temperature and humidity.

If the desiccant material 5 is disposed at the region upstream side (the air intake 21 side) of the heater core 13 of the temperature adjusting unit 10, it is required to perform the dehumidification at the following situation. That is, the dehumidification of the air by absorbing the moisture to the desiccant material side (desiccant material 5 and the moisture absorbent S) should be performed at the region where the relative humidity is high.

The well-known inorganic absorbent S has a property that the amount of change in moisture absorption is large at the relative humidity is low and that the amount of change in moisture absorption is small (moisture absorption is saturated) at the relative humidity is high.

When the well-known inorganic absorbent S is doped to the desiccant material 5, since moisture absorption is small at the region where the relative humidity is high, moving speed of the moisture is slow. Thereby, the moisture adsorption ability of the desiccant material 5 is low and thus the dehumidification ability of the desiccant material 5 regarding to the air passes through the first path 2 becomes low.

In case of this non-inventive embodiment, on the contrary, the moisture absorbent S has a property that the degree ΔH of the change in the moisture absorption amount in a region where relative humidity is high is larger than the degree ΔL of the change in moisture absorption in a region where the relative humidity is low. Thus, the moving speed of the moisture is fast.

Thereby, it is enabled to restrict the saturation in the moisture absorption while keeping the absorption amount of the moisture to the moisture absorbent S. Thus, the dehumidification ability of the desiccant material 5 with absorbent S is higher than that of the desiccant material with well-known inorganic absorbent S.

In this non-inventive embodiment, the relative humidity that is the boundary between the region where relative humidity is high and the region where relative humidity is low is set to 50%.

(7) The air conditioner 1 has a following configuration:
The moisture absorbent S has a following properties:
the degree ΔH of the change in the moisture absorption amount in a region where relative humidity is high is at least 1.2 times larger than the degree ΔL of the change in moisture absorption in a region where the relative humidity is low.

According to this configuration, the dehumidification of the air which passes through the first path 2 and whose relative humidity is high can be performed appropriate at the region where humidity is high of the moisture absorbent S.

(8) The air conditioner 1 has a following configuration:
The moisture absorbent S consists of organic polymer materials; the moisture absorbent S has a property capable of absorbing at surface thereof and capable of accommodating therein the moisture.

According to this configuration, the dehumidification of the air whose relative humidity is high can be performed appropriate.

### <SECOND NON-INVENTIVE EMBODIMENT>

The air conditioner 1A of the second non-inventive embodiment will be explained.

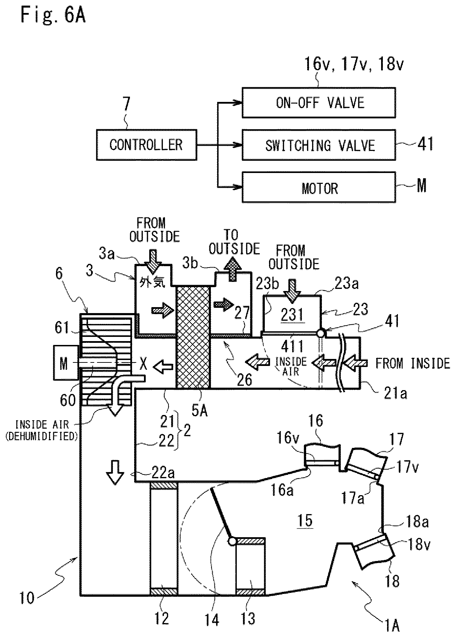

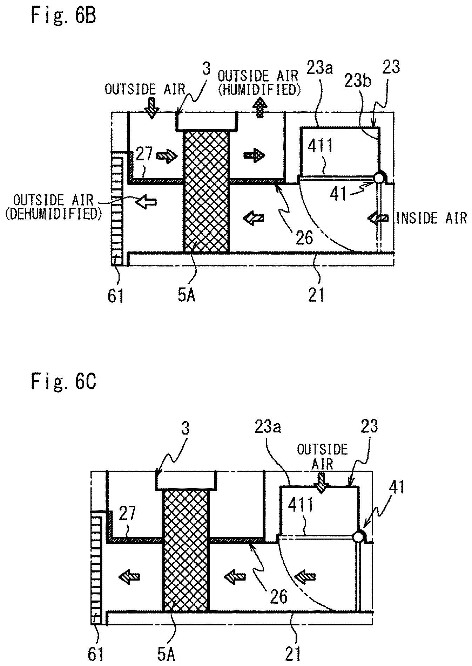

Figs.6A to 6C are figures explaining the main part of the air conditioner 1A. The main part of the air conditioner 1A is enlarged and schematically shown in Fig.6A. The relation between the position of a partition wall 411 in a switching valve 41 and the flow of air is shown in in Fig.6B and 6C.

As shown in Fig.6, the air conditioner 1A has a contact region 26 where the first path 2 and the second path 3 are disposed with their walls in contact with each other. In the first path 2, the region in the supply path 22 side than the outside air inlet 23 in the flow path 21 is the contact region 26.

In this contact region 26, the wall of the flow path 21 and the wall of the second path 3 are contacted with each other through a heat insulation layer 27. Thereby the heat exchange between air passing through the flow path 21 and air passing through the second path 3 is restricted.

The heat insulation layer 27 is: a layer of a heat insulation material disposed between the wall of the flow path 21 and the wall of the second path 3; or a layer of air within the sealed space formed between the wall of the flow path 21 the wall of the second path 3.

One end in the longitudinal direction of the second path 3 is an air intake 3a (second air intake) for the outside air, and the other end of the second path 3 is an air outlet 3b of the outside air sucked into the secondo path 3. The air intake 3a and the air outlet 3b are opened to outside of the vehicle.

The second path 3 is provided with a blower (not shown). When the blower is turned on by the controller 7, the outside air is sucked into the second path 3 through the air intake 3a. Then, the outside air sucked into the second path 3 flows toward the air outlet 3b from the air intake 3a.

In this non-inventive embodiment, the flow direction of the air passing through the second path 3 and the flow direction of the air passing through the flow path 21 of the second path 3 is set to be in the opposite direction. Here, outside air passes through the second path 3, and at least one of inside air and outside air passes through the flow path 21.

In the air conditioner 1A, the desiccant material 5A is provided in a contact region 26 between the first path 2 (flow path 21) and the second path 3 contact with each other. The desiccant material 5A is disposed across the flow path 21 and the second path 3. The desiccant material 5 is directed in a crossing direction (an orthogonal direction) to the flow direction of air each passing through the flow path 21 and the second path 3.

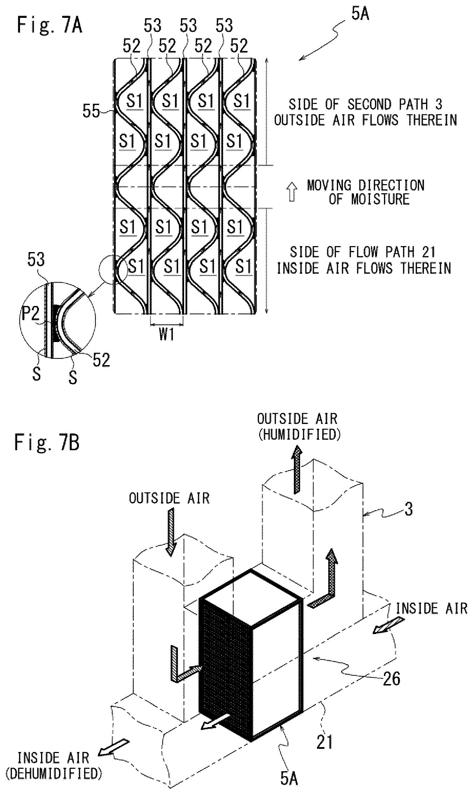

Fig.7 is a figure explaining the desiccant material 5A. The basic configuration and the function of the desiccant material 5A is shown in Fig.7A and the location of the desiccant material 5A looking from a diagonal direction is shown in Fig.7B.

As shown in Fig.7A, the desiccant material 5A has a plurality of base plates 53 and a wave-shaped part 52. A plurality of base plates 53 are disposed in parallel with each other with a determined interval W1. The wave-shaped part 52 is disposed between adjacent base plates 53 and 53.

The wave-shaped part 52 is disposed such that the wave-shaped part 52 alternately contacts with the base plate 53 of one side and the base plate 53 of the other side in a longitudinal direction of the wave-shaped part 52. Each of the contact point between the wave-shaped part 52 and the base plate 53 are adhered by the adhesive 55. The rigidity and strength of the desiccant material 5A is improved as a whole by disposing the wave-shaped pat 52 between base plates 53 and 53 which are dispose in parallel.

In this non-inventive embodiment, each of the space S1 surrounded by the base plate 53 and the wave-shaped part 52 functions as a flow path through which air, e.g., inside air and outside air, passes through. Hereinafter, the space S1 is also referred to as a flow path S1.

It is preferable that a moisture absorbent S consist of an organic polymer material is doped to or impregnated into the desiccant material 5A. It is more preferable that the moisture absorbent S is doped to or impregnated into at least the surface facing to the space S1 from among the base plate 53 and the wave-shaped part 52 (see Fig.7A).

As shown in Fig.7B, the desiccant material 5A is disposed across the flow path 21 and the second path 3. The flow path S1 of the desiccant material 5A is directed in a direction along the flow direction of air each passing through the flow path 21 and the second path 3.

Therefore, moisture in the inside air is absorbed to each region of the base plate 53 and the wave-shaped pat 52 disposed in the flow path 21, during when inside air passes through the flow path 21 and the outside air passes through the second path 3.

The absorbed moisture is moved to each region of the base plate 53 and the wave-shaped part 52 disposed in the second path 3, and then is taken into the outside air passing through the second path 3. Thus, like the case of the first non-inventive embodiment, the saturation of in absorb of the moisture at the desiccant material 5A can be prevented, during when each of inside air and outside air continuously passes through the flow path 21 and the second path 3 respectively. Thereby, the continuous dehumidification of inside air is enabled only by passing continuously through inside air and outside air respectively.

Hereinafter, the explanation will be made regarding when the operation mode of the air conditioner 1A is a desiccant mode.

### <DESICCANT MODE>

As shown in Figs.6A and 6B, when performing the desiccant mode, the partition wall 411 of the switching valve 41 is positioned to the first position for sucking the inside air. Thereby, the communication between the flow path 21 and the outside air inlet 23 is terminated. Thus, only the inside air sucked into the flow path 21 through the air intake 21a can flow in the flow path 21.

Then, the controller 7 rotates the rotor 61 of the sirocco fan 6 about the axis X by operating the motor M. Thereby, the inside air in the vehicle cabin 90 is sucked through the air intake 21a into the flow path 21 positioning upstream of the rotor 61.

The controller 7 actuates the blower (not shown). Thereby, the outside air is sucked into the second path 3, and the flow of air from the air intake 3a to the air outlet 3b is caused in the second path 3.

The air sucked into the flow path 21 passes through the contact region 26 of the flow path 21, and then fed to the supply path 22 downstream of the rotor 61.

The air sucked in the second path 3 passes through the contact region 26 of the flow path 21, and then exhausted from the air outlet 3b at the other end of the second path 3.

In the contact region 26 between the flow path 21 and the second path 3, the desiccant material 5A is disposed across the flow path 21 and the second path 3.

Here, the desiccant mode is performed in following case:
when the air passing through the flow path 21 is an air sucked from the vehicle cabin 90 and high in humidity; and
when the air passing through the second path 3 is an air sucked from the outside of the vehicle and low in humidity.

As described above, the air (inside air) sucked from the vehicle cabin 90 into the flow path 21 passes through the desiccant material 5A and the supply path 22, and then supplied to the temperature adjusting unit 10.

The moisture in inside air is absorbed to the each region of the base plate 53 and the wave-shaped part 52 of disposed in the flow path 21 during when inside air passes through the desiccant material 5A.

Thereby, inside air is supplied to the temperature adjusting unit 10 after the dehumidification.

Outside air sucked into the second path 3, on the other hand, is exhausted from the air outlet 3b after passing through the desiccant material 5A.

As described above, when performing the desiccant mode, the air (outside air) sucked from the outside of the vehicle is the air in low humidity. In this non-inventive embodiment, the air (outside air) passing through the second path 3 is used as a regeneration fluid for desorbing moisture from the desiccant material 5A during the operation of the desiccant mode.

Air (outside air) outside of the vehicle is humidified by desorbing the moisture from each region of the base plate 53 and the wave-shaped part 52 disposed in the second path 3, during when the outside air passes through the desiccant material 5A.

Thereby the moisture is desorbed from the region of the desiccant material 5 where in contact with the regeneration fluid. Thus, the desiccant material 5 is activated.

In the desiccant material 5A, the amount of moisture to be absorbed is high in the region disposed in the flow path 21 than the region disposed in the second path 3. This causing a phenomenon that making uniform the water distribution in the entire desiccant material 5A. Thus, moisture is moved from the region disposed in the flow path 21 to the region disposed in the second path 3.

Thereby, the saturation of in absorb of moisture at the desiccant material 5A can be prevented, in a state where each of inside air and outside air passes through continuously the flow path 21 and the second path 3 respectively.

Thus, the saturation in absorb of the moisture caused at well-known desiccant material can be prevented. Therefore, the reactivation of the desiccant material due to the saturation in absorb of the moisture like the conventional desiccant material is not required. That is, continuous dehumidification of air is enabled by continuously passing through the regeneration fluid.

Thereby, the humidity of the conditioned air to be supplied to the vehicle cabin 90 can be decreased when circulating the air (inside air) sucked from the vehicle cabin 90 and in the vehicle cabin 90 after adjusting the temperature of the air.

As described above, the air conditioner 1A for a vehicle of the second non-inventive embodiment has a following configurations.
(9) The desiccant material 5A is disposed at the contact region 26 where the first path 2 (flow path 21) and the second path 3 are disposed with their walls in contact with each other; and
The desiccant material 5A is disposed across the flow path 21 and the second path 3.

According to this configuration, the desiccant material 5A can be disposed with ease across the first path 2 to the second path 3 as long as it is possible to provide the region where the first path 2 and the second path 3 are disposed while contacting each other.
Thereby, the desiccant material 5A can be installed with ease.

The air conditioner 1A has a following configurations: (10) The heat insulation layer 27 is provide at the contact region 26. The heat insulation layer 27 is: a layer of a heat insulation material disposed between the wall of the flow path 21 and the wall of the second path 3; or a layer of air within the sealed space formed between the wall of the flow path 21 the wall of the second path 3.

According to this configuration, the heat exchange between air passing through the flow path 21 and air passing through the air flow path 22 is restricted by the heat insulation layer 27.

In case of winter season, for example, the air (inside air) within the vehicle cabin 90 that is high in temperature passes through the flow path 21 and outside air that is low in temperature than inside air passes through the second path 3. In this case, the cooling of inside air by the heat exchange with outside air can be restricted by existing the heat insulation layer 27.

Thereby, the decreasing in the heating efficiency can be restricted adequately due to the cooling of inside air by the heat exchange between inside air and outside air.

In the above described second non-inventive embodiment, it is disclosed as example that in the first path 2, the desiccant material 5A is disposed at the region between the air intake 21a and the region of supply ports 16a, 17a and 18 are provided.

Also, it is disclosed that the desiccant material 5A is disposed in the region where an air to be dehumidified constantly flows during the air conditioner 1A is in operation, more preferably the region where air constantly flows when the dehumidification of air passing through the first path 2 is performed.

The desiccant material 5A may be disposed at the region where the air do not pass through during when the dehumidification of the air sucked into the first path 2 is not performed.

For example, the detour that bypasses the contact region 26 may be provided to the configuration of Fig.6A. In this case it is preferable that the sucked air passes through the contact region 26 when performing the dehumidification of air and that the sucked air passes through the detour so as not to pass the contact region 26 when not performing the dehumidification.

Fig.8 is a schematic view of an air conditioner 1B of the first non-inventive modification.

In the above described non-inventive embodiment, the region upstream of the sirocco fan 6 in the flow direction of air in the first path 2 is disclosed as example of the region where an air constantly flows during the air conditioner 1 is in operation. Each of the desiccant material 5 and 5A is disposed at this region.

The region where an air constantly flows during the air conditioner 1 is in operation is not limited to the regions disclosed in the first and second non-inventive embodiment.

As shown in Fig.8, for example, the air conditioner 1B in which the desiccant material 5 is disposed in the mixing area 15 of the temperature adjusting unit 10 may be adoptable.

Supply ports 16a, 17a and 18a to ducts 16, 17 and 18 are opened to the mixing area 15. The inside of the duct 16, 17 and 18 are the region where the temperature adjusted air (conditioned air) flows intermittently.

Therefore, the region from the air intake 21a to the mixing area 15 in the first path 2 is the region where an air constantly flows during the air conditioner 1 is in operation.

As shown in Fig.8, the desiccant material 5 of the first non-inventive embodiment may be disposed to the intersection region 25 which is formed in the mixing area 15 by providing the second path 3 such that the second path 3 across the mixing area 15. By adopting this configuration, the same benefits obtained in the above described first non-inventive embodiment may be given.

(11) The air conditioner 1B has a following configurations:
The temperature adjusting unit 10A for adjusting the temperature of air passing through the first path 2 is provided to the first path 2.

In the temperature adjusting unit 10A, the mixing area 15 is provided at downstream in a flow direction of air passing through the first path 2. The air pass through the evaporator 12 and the air pass through the heater core 13 are mixed in the mixing area 15.

The second path 3 is disposed across the mixing area 15 of the temperature adjusting unit 10A. The desiccant material 5 is disposed to the intersection region 25 with the mixing area 15 in the second path 3.

The mixing area 15 of the temperature adjusting unit 10A is also corresponds to the region where an air constantly flows during the air conditioner 1 is in operation.

Thus, by adopting the above described configuration, it is possible to prevent property the occurrence of the situation where the air to be dehumidified is temporally humidified and the humidified air is supplied into the vehicle cabin through the supply port.

Here, the supply manager which determines the destination of the temperature adjusted air (conditioned air) to at least one supply port from among a plurality of supply ports 16a, 17a, and 18a is provided to the mixing are 15. The supply manager is configured by the on-off valve 16v, 17v, 18v and the controller 7.

Therefore, the region from the air intake 21a to the supply manager in the first path 2 is also considered as the region where an air constantly flows during the air conditioner 1B is in operation.

It is possible, in the air conditioner 1 and 1A in addition to the air conditioner 1B according to this non-inventive modification, to determine the position where each of the desiccant material 5 and 5A is disposed can be determined as follows:
That is, (12) the supply manager which determines the destination of the air passing through the first path 2 to at least one supply port from among a plurality of supply ports 16a, 17a, 18a is provided to the first path 2. The supply manager is configured by the on-off valve 16v, 17v, 18v and the controller 7. The desiccant material 5 is disposed at upstream of the supply manager in a flow direction of air pass through the first path 2. More preferably, the desiccant material 5 is disposed in front of the supply manager.

By adopting this configuration, the same benefits obtained in the above described first and second non-inventive embodiment may be given.

When disposing the desiccant material to the mixing area 15 or the supply manager, the desiccant material 5A may be disposed to the contact area with the wall of second path 3 that is formed to the mixing area 15 or the supply manager.

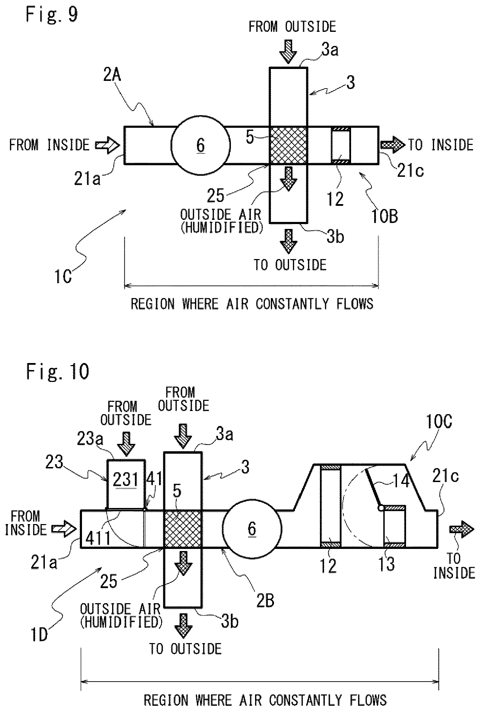

Fig.9 is a schematic figure explaining the air conditioner 1C of the second non-inventive modification.

Fig.10 is a schematic figure explaining the air conditioner 1D of the third non-inventive modification.

In the above described non-inventive embodiment, each of the air conditioner 1, 1A and 1B which has a plurality of outlet of the conditioned air to be supplied to the vehicle cabin 90 is exampled.

The air conditioner is adoptable to the air conditioner 1C which has only one outlet of the conditioned air to be supplied to the vehicle cabin 90.

The first path 2A of the air conditioner 1C has an air intake 21a for sucking the air in the vehicle cabin 90 at one end in a longitudinal direction thereof. An air outlet 21c for supplying the conditioned air into the vehicle cabin 90 is at the other end of the first path 2A.

In case of the air conditioner 1C, the region from the air intake 21a to the air outlet 21c corresponds to the region where an air constantly flows during the air conditioner 1B is in operation. In this region, the sirocco fan 6, the intersection region 25 and the evaporator 12 is disposed in this order from the air intake 21a side.

By adopting this configuration, it is possible to prevent property the occurrence of the situation where the air to be dehumidified is temporally humidified and the humidified air is supplied into the vehicle cabin 90 through the air outlet 21c.

In case of the air conditioner 1C, the position of the intersection region 25 is not limited to the position shown in Fig.9. The intersection region 25 may be disposed to any position between the air intake 21a and the air outlet 21c.

Like an above described second non-inventive embodiment, the contact region where the wall of the first path 2A and the wall of the second path 3 are contacted with each other may be provided instead of the intersection region 25, and the desiccant material 5A may be disposed to the contact region.

It is exampled in Fig.9 that the temperature adjusting unit 10B of the air conditioner 1C has only evaporator 12. As an example of this kind of the air conditioner 1C, an air conditioner for a large sized vehicle that has a simple configuration for supplying the conditioned air to the rear seat in the rear-side of the driver's seat can be exampled.

Therefore, the air conditioner in which the temperature adjusting unit 10B has a heater core instead of the evaporator may be adoptable as this kind of the air conditioner 1C.

As shown in Fig.10, the air conditioner according to this non-inventive embodiment is adoptable to an air conditioner 1D which has only one air outlet for supplying the conditioned air into the vehicle cabin 90.

The first path 2B of the air conditioner 1D has an air intake 21a for sucking the air in the vehicle cabin 90 at one end in a longitudinal direction thereof. An air outlet 21c for supplying the conditioned air into the vehicle cabin 90 is at the other end of the first path 2B.

In case of the air conditioner 1D, the region from the air intake 21a to the air outlet 21c corresponds to the region where an air constantly flows during the air conditioner 1D is in operation.

In this region, the outside air inlet 23, the intersection region 25, the sirocco fan 6 and the temperature adjusting unit 10C are disposed in this order from the air intake 21a side.

The temperature adjusting unit 10C has an evaporator 12, a heater core 13, and a mix door 14. The temperature adjusted air (conditioned air) is supplied into the vehicle cabin 90 through the air outlet 21c.

By adopting this configuration, it is possible to prevent property the occurrence of the situation where the air to be dehumidified is temporally humidified and the humidified air is supplied into the vehicle cabin 90 through the air outlet 21c.

In case of the air conditioner 1D, the position of the intersection region 25 is not limited to the position shown in Fig.10. The intersection region 25 may be disposed to any position between the air intake 21a and the air outlet 21c.

Like an above described second non-inventive embodiment, a contact region where the wall of the first path 2A and the wall of the second path 3 are contacted with each other may be provided instead of the intersection region 25, and the desiccant material 5A may be disposed to the contact region.

(13) As described above, each of the air conditioner 1C and 1D has a following configuration.

The temperature adjusting unit 10B and 10C for adjusting the temperature of air passes through the first path 2A and 2B is disposed to the first path 2A and 2B.

The region from the air intake 21a to the air outlet 21c in each of the first path 2A and 2B corresponds to the region where air constantly flows during the air conditioner 1C and 1D is in operation.

By adopting this configuration, it is possible to prevent property the occurrence of the situation where the air to be dehumidified is temporally humidified and the humidified air is supplied into the vehicle cabin 90 through the air outlet 21c.

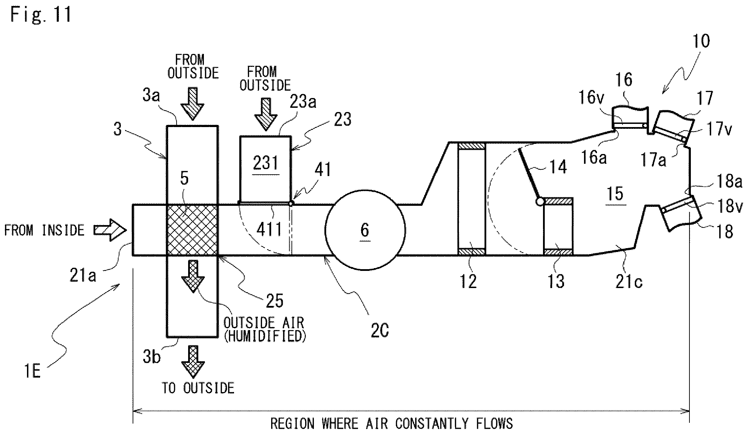

Fig.11 is a schematic figure explaining the air conditioner 1E of the fourth non-inventive modification. In the above described first non-inventive embodiment, in a case where the desiccant material 5 is disposed to the region downstream of the outside air inlet 23 in the flow path 21 was exampled.

The air conditioner, in which the desiccant material 5 is disposed to the region upstream of the outside air inlet 23 in the flow path 21 like the air conditioner 1E shown in Fig.11, may be adoptable as the air conditioner of the present non-inventive embodiments.

In this case, the region from the air intake 21a to the mixing area 15 of the first path 2C corresponds to the region where air constantly flows during the air conditioner 1E is in operation.

Also in case of the air conditioner 1E, like an above described second non-inventive embodiment, the contact region where the wall of the first path 2C and the wall of the second path 3 are contacted with each other may be provided instead of the intersection region 25, and the desiccant material 5A may be disposed to the contact region.

### [FIRST MODIFICATION ACCORDING TO THE INVENTION]

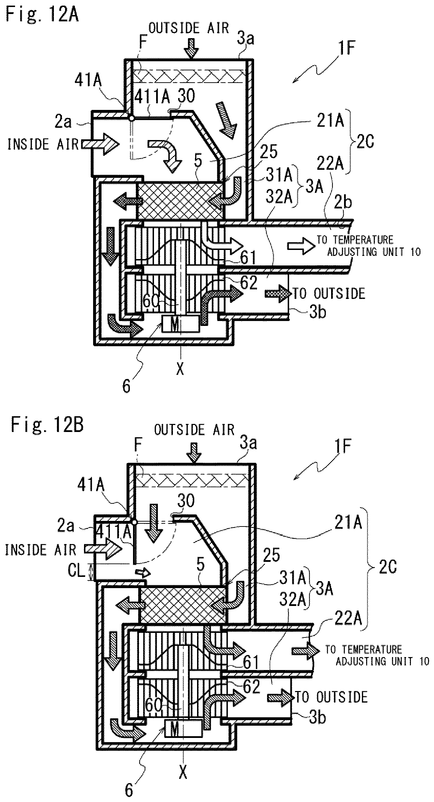

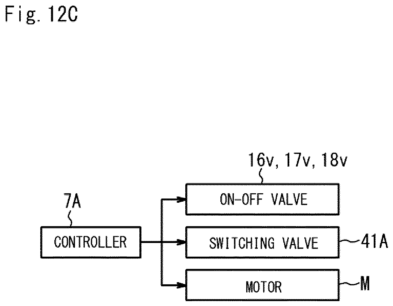

Fig.12 is a schematic figure explaining the air conditioner 1F of the first modification according to the invention. The air flow in case the partition wall 411A of the switching valve 41A is placed to the first position is shown in Fig.12A. The air flow in case the partition wall 411A of the switching valve 41A is placed to the second position is shown in Fig.12B. The configuration of the controller 7A of the air conditioner 1F is shown in Fig.12C.

In the above described first non-inventive embodiment, in a case where the air conditioner 1 has two air intakes of the outside air, i.e. the air intake 23a of the outside air inlet 23 and the air intake 3a of the second path 3, is exampled.

The air conditioner 1F of the first modification according to the invention is different from the air conditioner 1 of the first non-inventive embodiment in the point that the air conditioner 1F has only one air intake of the outside air, i.e. the air intake 3a of the second path 2.

As shown in Fig.12, the air conditioner 1F has a first path 2C and a second path 3A. The first path 2C has a first flow path 21A and a first supply path 22A. The first flow path 21A has an air intake 2a for an air in the vehicle cabin 90 at one end in a longitudinal direction thereof. The first supply path 22A has a connection port 2b with the temperature adjusting unit 10 at one end in a longitudinal direction thereof.

The second path 3A has a second flow path 31A and a second supply path 32A. The second flow path 31A has an air intake 3a for sucking air outside of the vehicle at one end in a longitudinal direction thereof. The second supply path 32A has an air outlet 3b for exhausting air to the outside of the vehicle at one end in a longitudinal direction thereof.

The first supply path 22A of the first path 2C and the second supply path 32A of the second path 3A are disposed with their walls in contact with each other. At the region where walls are contacted with each other, the wall of the first supply path 22A and the wall of the second supply path 32A are contacted with each other through a heat insulation layer. Thereby the heat exchange between the air passing through the first supply path 22A and the air passing through the second supply path 32A is restricted.

Each of the rotor 61 and 62 of the sirocco fan 6 is respectively disposed in each inside of the first supply path 22A and the second supply path 32A.

The rotor 61 and 62 is connected to the output shaft 60 which is disposed across the first supply path 22A and the second supply path 32A. The rotor 61 and 62 rotates integrally around the axis X by the rotational driving force of the motor M.

When the rotor 61 and 62 of the sirocco fan 6 rotates about the axis X, an air is sucked from the direction of the rotation axis (axis X) toward the rotor 61 and 62. Then, the sucked air is supplied to the radial direction of the axis X from the rotor 61 and 62.

Therefore, in the first path 2C, the first flow path 21A is connected to the first supply path 22A from the direction of the axis X. The first flow path 21A is connected to the region of the first supply path 22A where the rotor 61 is disposed.

Also, in the second path 3A, the second flow path 31A is connected to the second supply path 32A from the direction of the axis X. The second flow path 31A is connected to the region of the second supply path 32A where the rotor 62 is disposed.

The second flow path 31A of the second path 3A is disposed such that the second flow path 31A circumvent the region where the rotor 61 and 62 are disposed in each of the first supply path 22A and the second supply path 32A.

In the first flow path 21A of the first path 2C, the intersection region 25 is provided in the vicinity of the connection part with the first supply path 22A. The second flow path 31A of the second path 3A intersects the first flow path 21A of the first path 2C at the intersection region 25. The first flow path 21A and the second flow path 31A are orthogonal to each other at the intersection region 25 and the desiccant material 5 is disposed to the intersection region 25.

The first flow path 21A and the second flow path 31A are located in a state contacting the wall with each other at upstream of the intersection region 25.
The heat insulation layer is also provided to the region where walls of the first flow path 21A and the second flow path 31A are contacted with each other.

The air intake 2a side of the first path 2C and the air intake 3a side of the second path 3A are disposed directing each opening of the air intakes 2a and 3a to the different direction.
The air intake 2a of the first path 2C is opened within the vehicle cabin 90. The air intake 3a of the second path 3A is opened for example within the engine room 93 (see Fig.1).

A filter F is provided in the vicinity of the air intake 3a of the second path 3A. The filter F is disposed in a direction such that the filter F across the flow of air in the second path 3A.

The air sucked into the second path 3A through the air intake 3a arrive at the intersection region 25 to which the desiccant material 5 is disposed after passing through the filter F.

A through hole 30 (first communication port) and a switching valve 41A (first valve) are provided to the region where the first flow path 21A and the second flow path 31A are located in a state contacting the wall with each other. This region is at upstream of the intersection region 25. The through hole 30 communicates the first flow path 21A with the second flow path 31A. The switching valve 41A opens and closes the through hole 30.

In ups and down direction in Fig.12A, the through hole 30 is positioned on an extended line in an opening direction of the air intake 3a. When the through hole 30 is not closed, the outside air sucked into the second flow path 31A through the air intake 3a is capable of being flow into the first flow path 21A via the through hole 30.

The switching valve 41A has a partition wall 411A capable of open and close of the through hole 30. The partition wall 411A is formed in a shape and a size capable of closing the through hole 30. The switching valve 41a displaces the partition wall 411A between the first position (see Fig.12A) and the second position (see Fig.12B), in accordance with the command by the controller 7A shown in Fig.12C.

### [FIRST POSITION]

The controller 7A places the partition wall 411A to the first position by actuating the switching valve 41A when dehumidifying the air in the vehicle cabin 90.

As shown in Fig.12A, when the partition wall 411A is placed to the first position, the opening of the through hole 30 is closed by the partition wall 411A, and thus the communication between the first flow path 21A and the second flow path 31A is terminated.

Then, when the sirocco fan 6 is made to be in operation, air (inside air) in the vehicle cabin 90 is sucked into the first flow path 21A through the air intake 2a, and thus inside air passes through the first path 2C. Furthermore, outside air outside of the vehicle is sucked into the second flow path 31A through the air intake 3a and passes through the second path 3A.

Here, the air (inside air) sucked from the vehicle cabin 90 is often the air in high humidity containing large amount of moisture. The moisture contained in the inside air is absorbed to the desiccant material 5 when the inside air passes through the desiccant material 5 disposed to the intersection region 25.

That is, the inside air is dehumidified when passing through the desiccant material 5. Then, the dehumidified inside air is supplied to the temperature adjusting unit 10 via the first supply path 22A by the sirocco fan 6 (see arrow in figure).

On the other hand, the outside air sucked from the air intake 3a passes through the second path 3A. The outside air is humidified by taking the moisture absorbed to the desiccant material 5 therein when the outside air passes through the desiccant material 5 disposed to the intersection region 25.

That is, outside air is humidified when passing through the desiccant material 5, and then the humidified outside air is exhausted via the air outlet 3b by the sirocco fan 6 (see arrow in figure).

In this way, moisture in the inside air is absorbed to the desiccant material 5 and thus the inside air is dehumidified, and moisture absorbed to the desiccant material 5 is taken in the outside air and thus the desiccant material 5 is reactivated. Thereby, the desiccant material 5 is not saturated by the absorbed moisture, and thus the continuous dehumidification of inside air is enabled.

### [SECOND POSITION]

The controller 7A places the partition wall 411A to the second position by actuating the switching valve 41A when ventilating et al the vehicle cabin 90.

As shown in Fig.12B, when the partition wall 411A is placed to the second position, the opening of the through hole 30 is opened, and thus the communication between the first flow path 21A and the second flow path 31A is established.

Then, when the sirocco fan 6 is made to be in operation, air (outside air) outside of the vehicle is sucked into the second flow path 31A through the air intake 3a. A part of the air sucked into the second flow path 31A flows into the first flow path 21A via the through hole 30. Outside air flow into the first flow path 21A passes through the intersection region 25 and the first supply path 22A and then supplied to the temperature adjusting unit 10 (see arrow in figure).

The partition wall 411A of the switching valve 41A is formed small in size than the cross-sectional area of the air intake 2a side in the first flow path 21A. Therefore, the clearance CL remains between the partition wall 411A and the inside wall of the first flow path 21A, even when the partition wall 411A is placed to the second position.

Therefore, the air intake 2a side in the first flow path 21A is not closed completely by the partition wall 411A.

The partition wall 411A may be provided so that the air intake 2a side in the first flow path 21A is closed completely by the partition wall 411A. In this case, the clearance CL may be formed by placing the partition wall 411A at intermediate position where both of the air from the air intake 2a and the air from the air intake 3a flow into the desiccant material 5. For example, the clearance CL may be formed by placing the partition wall 411A to the position where making the opening rate of the first flow path 21A side to 20% and making the opening rate of the second flow path 31A side to 80%.

When making the sirocco fan 6 in operation, not only the outside air sucked through the through hole 30 and the air intake 3a but the inside air sucked from the air intake 2a follow inside of the first flow path 21A.

In case of cooling operation of the air conditioner in summer season, the temperature of the inside air is lower than that of the outside air. Therefore, when the partition wall 411A of the switching valve 41A is placed to the second position, the mixed air of the outside air high in temperature and the inside air low in temperature is supplied to the temperature adjusting unit 10.

When the intake of the inside air through the air intake 2a is completely shut out, the outside air high in temperature is only supplied to the temperature adjusting unit 10. The mixed air of the outside air high in temperature and the inside air low in temperature is low in temperature than that of the outside air.

If it is configured that the mixed air is supplied to the temperature adjusting unit 10 during when the air conditioner 1F is in cooling operation, the load in the temperature adjusting unit 10 can be reduced than when only outside air is supplied to the temperature adjusting unit 10.

In case of heating operation of the air conditioner in winter season, the temperature of the inside air is higher than that of the outside air. Thus, the mixed air of the outside air low in temperature and the inside air high in temperature is high in temperature than that of outside air.

Therefore, if it is configured that the mixed air, which is high in temperature than the outside air, is supplied to the temperature adjusting unit 10 during when the air conditioner 1F is in heating operation, the load in the temperature adjusting unit 10 can be reduced than when only outside air is supplied to the temperature adjusting unit 10.

The partition wall 411A may be formed in size such that the first flow path 21A is completely closed. In this case, the temperature of the mixed air to be supplied to the temperature adjusting unit 10 can be adjusted to the target temperature by placing the partition wall 411A to the position where the first flow path 21A is not closed completely.

The outside air, which was not flow in the first flow path 21A from among the outside air sucked into the second flow path 31A via the air intake 3a, passes through the desiccant material 5 and then exhausted from the air outlet 3b of the second supply path 32A.

The air conditioner 1F has a following configuration. (14) the air conditioner 1F has: a first path 2C through which the air sucked through the air intake 2a (first air intake) flows therein; a second path 3A through which air sucked through the air intake 3a flows therein; and a desiccant material 5 disposed across the first path 2C and the second path 3A.

The outside air passes through the second path 3A as a regeneration fluid for the desiccant material 5. The desiccant material 5 in the first path 2C is disposed at the region where an air constantly flows during the air conditioner 1F is in operation. The sirocco fan 6 (first blower and second blower) is provided in the first path 2C. The sirocco fan 6 supplies the air sucked through the air intake 2a to the supply port to the vehicle cabin 90.

The switching valve 41A (first valve) is disposed upstream of the sirocco fan 6 in a flow direction of an air in the first path 2C, the switching valve 41A determines the air flows into the first path 2C from among the inside air and the outside air.

According to this configuration, the air intake 3a for the outside air in the second path 3A can be used as an air intake for the outside air in the first path 2C.

Thereby, when it is required to provide an air intake for the outside air to the first path 2C, the air intake 3a of the second path 3A can be used as the air intake for the first path 2C. In this case, it is not required to provide the air intakes to each of the first path 2C and the second path 3A, the enlargement of the air conditioner can be prevented.

(15) The through hole 30 (first communication port) which communicates the first path 2C with the second path 3A is provided. The air flows into the first path 2C is determined from among the inside air and the outside air by the open and close of the through hole 30 in the switching valve 41A (first valve).

According to this configuration, the air to be supplied to the temperature adjusting unit 10 can be determined appropriately, and at least one of the outside air and the inside air is supplied to the temperature adjusting unit 10.

(16) The switching valve 41A has the partition wall 411A for the open and close of the through hole 30 (first communication port). The switching valve 41A displaces the partition wall 411A between the first position and the second position.

The partition wall 411A is placed to the first position (closed position) where the through hole 30 is closed by the partition wall 411A. The partition wall 411A is placed to the second position (opened position) where the through hole 30 is not closed by the partition wall 411A.

When the partition wall 411A is placed to the second position (outside air intake position).
, the mixed air of the outside air and the inside air is supplied to the temperature adjusting unit 10.

The outside air is an air sucked from outside of the vehicle through the air intake 3a of the second path 3A. The inside air is an air sucked from inside of the vehicle through the air intake 2a.

When the partition wall 411A is placed to the first position (inside air intake position).
, the air (inside air) sucked from inside of vehicle via the air intake 2a is supplied to the temperature adjusting unit 10.

According to configuration, the inside air and the outside air are supplied to the temperature adjusting unit 10 when partition wall 411A is placed to the second position (outside air intake position).

In case of cooling operation in summer season of the air conditioner 1F, the mixed air of the outside air high in temperature and the inside air low in temperature is supplied to the temperature adjusting unit 10. The load in the temperature adjusting unit 10 can be reduced than when the outside air high in temperature is only supplied to the temperature adjusting unit 10.

Also, the inside air relatively low in temperature than outside of the vehicle is also used in addition to the outside air heated by insolation. Thereby cooling efficiency is improved.

When it is required to provide an air intake for the outside air to the first path 2C, the air intake 3a of the second path 3A can be used as the air intake for the first path 2C. In this case, it is not required to provide the air intakes to each of the first path 2C and the second path 3A, the enlargement of the air conditioner can be prevented.

In case of heating operation in winter season of the air conditioner 1F, the mixed air of the outside air low in temperature and the inside air high in temperature is supplied to the temperature adjusting unit 10. The load in the temperature adjusting unit 10 can be reduced than when the outside air low in temperature is only supplied to the temperature adjusting unit 10. Thereby heating efficiency is improved.

(17) The air conditioner 1F has a following configuration.

The intersection region 25 between the first path 2C and the second path 3A is disposed at the region between the switching valve 41A and the sirocco fan 6.

The desiccant material 5 is disposed to the intersection region 25, and is disposed between the switching valve 41A (first valve) and the sirocco fan 6 (first blower) in the first path 2C.

When the inside air sucked through the air intake 2a is high in humidity, making the outside air low in humidity sucked through the air intake 3a passes through the second path 3A by placing the partition wall 411A to the first position.

According to this configuration, moisture in the inside air high in humidity is absorbed to the desiccant material 5 in the intersection region 25, and moisture absorbed to the desiccant material 5 is taken in the outside air low in humidity. Thereby, the desiccant material 5 is reactivated. Therefore, the desiccant material 5 is not saturated by the absorbed moisture, and thus the continuous dehumidification of inside air is enabled.

### [SECOND MODIFICATION ACCORDING TO THE INVENTION]

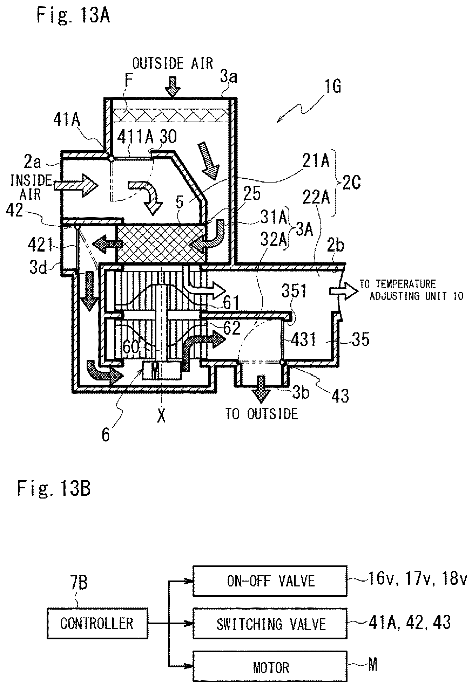

Fig.13 is a schematic figure explaining the air conditioner 1G of the second modification according to the invention. An air flow in case where partition wall 411A, 421 and 431 of the switching valve 41A, 42 and 43 is placed to the second position is shown in Fig.13A. The configuration of the controller 7B of the air conditioner 1G is shown in FIG.13B.

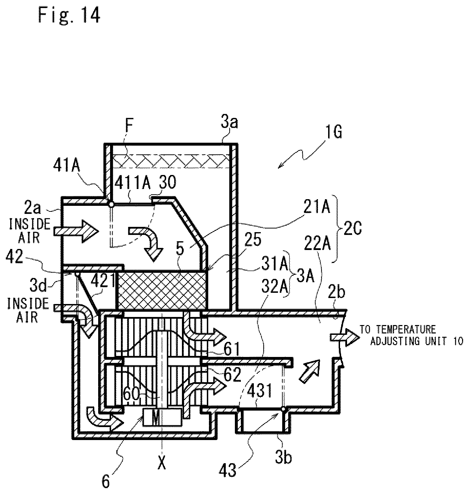

Fig.14 is a schematic figure explaining the air conditioner 1G of the second modification according to the invention. An air flow in case where partition wall 411A, 421 and 431 of the switching valve 41A, 42 and 43 is placed to the third position is shown in Fig.14.

In the above described modification, the air conditioner 1F has one air intake 3a for outside air and one air intake 2a for inside air. In this air conditioner 1F, part of the outside air sucked through the air intake 3a flows the inside of the first path 2C having the air intake 2a for inside air. The remaining outside air not flowing inside of the first path 2C passes through the second path 3A and exhausted to the outside of the vehicle.

The air conditioner according to this invention, as shown in Fig.13A, the second path 3A of the air conditioner 1G has an air intake 3d for inside air at the middle thereof. The air conditioner 1G is different from the air conditioner 1F of the first modification according to the invention in the point that the second path 3A with the air intake 3d is also useable as the flow path for inside air.

In the following explanation, the explanation regarding the configuration same as that of in first modification according to the invention (see Fig.12) will be omitted as appropriate.

As shown in Fig.13, the air intake 3d for the inside air is disposed to the region between the intersection region 25 (desiccant material 5) and the sirocco fan 6 in the second path 3A of the air conditioner 1G. The air intake 3d communicates the inside of the vehicle cabin 90 and the inside of the second flow path 31A at downstream of the intersection region 25 in the second flow path 31A.

In this modification according to the invention, the air intake 3d is disposed such that opening of the air intake 3d is directed in the same direction of the opening of the air intake 2a of the first path 2C. The enlargement in size of the air conditioner 1G is restricted by placing the air intake 2a and the air intake 3d close to each other.

The switching valve 42 for open and close of the air intake 3d is disposed to the second flow path 31A. The switching valve 42 has a partition wall 411 capable of open and close of the air intake 3d. The partition wall 411 is formed in size and shape capable of closing the air intake 3d. The switching valve 42 displaces between the third position (see Fig.14) and the second position (see Fig.13A) in accordance with the command from the controller 7B shown in Fig.13B.

As shown in Fig.13A, a connection path 35 is provided to the second path 3A in the vicinity of the air outlet 3b. The connection path 35 communicates the second supply path 32A of the second path 3A with the first supply path 22A of the first path 2C.

The second supply path 32A of the second path 3A elongates toward a radial direction of the rotation axis X of the rotor 62 of the sirocco fan 6. That is, the second supply path 32A is disposed along the flow direction of the air supplied from the sirocco fan 6.

The air outlet 3b of the second supply path 32A is disposed directing the opening to the axial direction X. The inlet 351 of the connection path 35 is opened on an extended line of the second supply path 32A. The switching valve 43 for open and close of the inlet 351 is disposed to the second supply path 32A.

The switching valve 43 has a partition wall 431 for open and close of the inlet 351. The partition wall 431 is formed in a shape and size capable of close of the inlet 351.
The switching valve 43 displaces the partition wall 431 between the third position (see Fig.14) and the second position (see Fig.13A) in accordance with the command from the controller 7B shown in Fig.13B.

### [SECOND POSITION]

The controller 7B places the partition wall 411A, 421 and 431 to the second position by actuating the switching valve 41A, 42 and 43 when dehumidifying the air (inside air) in the vehicle cabin 90.

As shown Fig.13A, when the sirocco fan 6 is made to be in operation while keeping the position of the partition wall 411A, 421 and 431 at the second position, the air (inside air) in the vehicle cabin 90 is sucked into the first flow path 21A through the air intake 2a. Then the sucked air (inside air) passes through the inside of the first path 2C. Also, the air (outside air) outside of the vehicle is sucked through the air intake 3a and then passes through the inside of the second path 3A.

Thereby, the inside air sucked through the air intake 2a is dehumidified during when the inside air passes through the desiccant material 5. Then, the dehumidified inside air is supplied to the temperature adjusting unit 10 from the first supply path 22A by the sirocco fan 6 (see arrow in figure).

The outside air sucked through the air intake 3a, on the other hand, is humidified when passing through the desiccant material 5. Then, the humidified outside air is exhausted from the air outlet 3b to the outside of the vehicle by the sirocco fan 6(see arrow in figure).

As described above, moisture in the inside air is absorbed to the desiccant material 5 and the inside air is dehumidified. Moisture absorbed to the desiccant material 5 is taken in the outside air and thus the desiccant material 5 is reactivated. Therefore, the desiccant material 5 is not saturated by the absorbed moisture, and thus the continuous dehumidification of the inside air is enabled.

### [THIRD POSITION]

The controller 7A places the partition wall 411A, 421 and 431 to the third position by actuating the switching valve 41A, 42 and 43, for example just after in operation of the air conditioner 1G in summer season. As shown in Fig.14, when the sirocco fan 6 is made to be in operation while keeping the position of the partition wall 411A, 421 and 431 at the third position, the air (inside air) in the vehicle cabin 90 is sucked into the first flow path 21A through the air intake 2a. Then the sucked air flows inside of the first path 2C. Also, the air (inside air) inside of the vehicle cabin 90 is sucked through the air intake 3d and then flows inside of the second path 3A.

Inside air sucked into the first path 21A passes through the intersection region 25, and then supplied to the temperature adjusting unit 10 through the first supply path 22A. The inside air sucked into the second flow path 31A flows into the first supply path 22A through the second supply path 32A and the connection path 35, and finally supplied to the temperature adjusting unit 10.

For example just after the start of the cooling operation of the air conditioner 1G in summer season, the temperature inside of the vehicle cabin 90 is often being high in temperature. In this case, it is preferable that to proceed the cooling of the vehicle cabin 90 by supplying the temperature adjusted air (conditioned air) in the temperature adjusting unit 10 to the vehicle cabin 90, while actively exhausting the air in the vehicle cabin 90 to the outside of the vehicle.

Increasing the amount of air to be supplied in the vehicle cabin is preferable for exhausting the air inside the vehicle cabin 90 to the outside of the vehicle actively.

According to this configuration, air can be supplied to the temperature adjusting unit 10 by using both of the first path 2C and the second path 3A. The mount of air to be supplied to the temperature adjusting unit 10 can be increased than when supplying air from the first path 2C only.

The increasing in amount air to be supplied to the temperature adjusting unit 10 is enabled by using both of the first path 2C and the second path 3A by adopting the above described configuration.

Thereby, air flow maximum in volume can be obtained by using rotor 61 and 62 of the up and down without using the desiccant material, during when the load for cooling the air just after the start of the cooling is high.

(18) The air conditioner 1G has a following configuration.

The second path 3A is provided with: the air outlet 3b for exhausting the air flowing in the second path 3A to the outside of the vehicle; the air intake 3d (second air intake) for sucking the air (inside air ) inside of the vehicle; the rotor 62 (second blower) of the sirocco fan 6 for suppling the air inside the second path 3A toward the air outlet 3b; and the switching valve 42 (secondo valve) for determining the air to be supplied toward the air outlet 3b by the sirocco fan 6 between the air (outside air) sucked from outside of the vehicle through the air intake 3a and the air (inside air) sucked from inside of the vehicle cabin 90 through the air intake 3d.

The connection path 35 (second communication port) and the switching valve 43 (third valve) is provided to the second path 3A. The connection path 35 is disposed between the sirocco fan 6 and the air outlet 3b, and the connection path 35 communicates the second path 3A with the first path 2C. The switching valve 43 performs the open and close of the inlet 351 of the connection path 35.

According to this configuration, an air in the vehicle cabin 90 can be sucked by using both of the first path 2C and the second path 3A, and the sucked air can be supplied to the temperature adjusting unit 10. It is preferable that the amount of the conditioned air to be supplied in the vehicle cabin 90 is large, when it is required to exhaust the air inside the vehicle cabin 90 to the outside of the vehicle such as in case that just after the start of the cooling operation of the air conditioner 1G in summer season.

By adopting the above described configuration, t the sufficient amount of the air to be supplied to the vehicle cabin 90 can be ensured. Thereby, the temperature in the vehicle cabin 90 can be cooled to target temperature in more short time.

The modification of the present invention has been explained.

The configuration in which an organic polymer material is doped to the desiccant material 5 has been explained in detail in the first non-inventive embodiment. This configuration may be adoptable in the other embodiment and modification.

Also, in the first non-inventive embodiment, it is exampled that the desiccant material 5 is provided to the intersection region between two paths (the first path 2 and the second path 3) and that the moisture absorbent S is doped to the desiccant material 5 (Fig. 3 and 4). Since the same benefits such as in case of the above described non-inventive embodiment can be obtained, the following configuration can be adopted: the desiccant material 5A is provided to the contact region 26 where two paths are disposed in a state contacting the wall with each other as shown in Figs 6 and 7; and the moisture absorbent S is doped to the desiccant material S.

This configuration can be adopted to the air conditioners 1B to 1G explained in modifications 1 to 6, and the same benefits can be obtained.

An air conditioner 1 and 1A to 1G; a temperature adjusting unit 10, 10A and 10B; an evaporator 12; a heater core 13; a mix door 14; a mixing area 15; a ducts 16; a supply port 16a, 17a and 18a; an air outlet 16b, 17b, 17c and 18c; an on-off valve 16v, 17v and 18v; a first path 2, 2A, 2B and 2C; a flow path 21; an air intake 21a; air outlet 21c; an air flow path 22; an air intake 2a; a connection port 2b; a first flow path 21A; a first supply path 22A; a connection port 22a; an outside air inlet 23; an air intake 23a; an opening 23b; a junction part 24; an intersection region 25; a contact region 26; a heat insulation layer 27; a second path 3; a through hole 30; a second flow path 31A; a second flow path 32A; a connection path 35; an inlet 351; an air intake 3a; an air outlet 3b; an air intake 3d; a switching valve 41, 41A, 42 and 43; a partition wall 411, 411A,421 and 431; a desiccant material 5 and 5A; a base part 50, 50A and 50B; a tube-shaped part 51; a side portion 511 and 512; a wave-shaped part 52; a base plates 53; an adhesive 55; a sirocco fan 6; an output shaft 60; a rotor 61 and 62; a controller 7, 7A and 7B; a vehicle cabin 90; an instrument panel 91; an engine room 93; a motor M; a moisture absorbent S; a flow path S1 and S3; vehicle V; windshield glass W; and axis X.

## Claims

1. An air conditioner (1F) for a vehicle comprising:
a first path (2C) having a first flow path (21A) and a first supply path (22A) through which an air taken in through a first air intake (2a) flows therein;
a second path (3A) having a second flow path (31A) and a second supply path (32A) through which an outside air taken in through an outside air intake (3a) flows therein, the outside air is an air outside of a vehicle when the air conditioner (1F) is mounted on the vehicle, the second supply path (32A) has an air outlet (3b) for exhausting air to the outside of the vehicle; and
a desiccant material (5) disposed across the first path (2C) and the second path (3A), the first flow path (21A) and the second flow path (31A) being located upstream the desiccant material (5) in the direction of the air flow, the outside air flows through the second path (3A) as a regeneration fluid for the desiccant material (5), wherein
the desiccant material (5) in the first path (2C) is disposed in a region where an air constantly flows during the air conditioner is in operation,
a first blower (6) for supplying the air taken in through the first air intake (2a) toward a supply port of a vehicle cabin is provided in the first path (2C), and
a first valve (41A) for determining the air flows into the first path (2C) from among an inside air and the outside air is disposed upstream of the first blower (6), the inside air is an air in the vehicle cabin when the air conditioner is mounted on the vehicle,
**characterized in that** the air conditioner (1F) comprises a first communication port (30) communicating the first flow path (21A) with the second flow path (31A), the air flowing into the first path (2C) is determined from among the inside air and the outside air by the open and close of the communication port (30) in the first valve (41A) .

2. The air conditioner for a vehicle according to claim 1, wherein
the first valve (41A) is switchable between a closed position closing the first communication port (30) and an opened position opening the first communication port (30),
the mixed air of the inside air and the outside air flows in the first path (2C) when the first valve (41A) is in opened position.

3. The air conditioner for a vehicle according to claim 2, wherein
the second path (3A) is provided with the air outlet (3b), a second air intake (3d), a second blower (6), a second valve (42), a second communication port (35), and a third valve (43),
the air outlet (3b) is for exhausting the air flowing in the second path (3A) to the outside of the vehicle,
the second air intake (3d) is for taking in the inside air,
the second blower (6) is for supplying the air in the second path (3A) toward the air outlet,
the second valve (42) for determining the air supplied toward the air outlet (3b) from among the inside air and the outside air, the second valve (42) for open and close of the air intake (3d) is disposed to the second flow path (31A),
the second communication port (35) is disposed between the second blower (6) and the air outlet (3b) and communicating the second path (3A) with the first path (2C), and
the third valve (43) opens and closes the second communication port (35).

4. The air conditioner for a vehicle according to any one of claims 1, 2 and 3, wherein
the desiccant material (5) is disposed between the first valve (41A) and the first blower (6) in the first path (2C).

5. The air conditioner for a vehicle according to any one of claims 1, 2 und 3, wherein
a temperature adjusting unit (10) for controlling the temperature of the air flowing in the first path (2C) is disposed to the first path (2C),
the desiccant material (5) is disposed at the region in the first air intake (2a) side than the temperature adjusting unit (10) in the first path (2C) in the air flow direction.

6. The air conditioner for a vehicle according to any one of claims 1 to 5, wherein
the desiccant material (5) is disposed across the first path (2C) and the second path (3A) at an intersection region between the first path (2C) and the second path (3A) .

## Patentansprüche

1. Klimaanlage (1F) für ein Fahrzeug, aufweisend:
einen ersten Pfad (2C), der einen ersten Strömungsweg (21A) und einen ersten Zuführungsweg (22A) aufweist, durch welchen eine durch einen ersten Lufteinlass (2A) angesaugte Luft strömt;
einen zweiten Pfad (3A), der einen zweiten Strömungsweg (31A) und einen zweiten Zuführungsweg (32A) aufweist, durch welchen eine durch einen Außenlufteinlass (3) angesaugte Außenluft strömt, wobei die Außenluft eine Luft außerhalb eines Fahrzeugs ist, wenn die Klimaanlage (1F) an dem Fahrzeug montiert ist, wobei der zweite Zuführungsweg (32A) einen Luftauslass (3b) zum Auslassen der Luft zur Außenseite des Fahrzeugs aufweist; und
ein Trockenmaterial (5), das über den ersten Pfad (2C) und den zweiten Pfad (3A) angeordnet ist, wobei sich der erste Strömungsweg (21A) und der zweite Strömungsweg (31A) stromaufwärts des Trockenmaterials (5) in der Richtung der Luftströmung befinden,
wobei die Außenluft durch den zweiten Pfad (3A) als ein Regenerationsfluid für das Trockenmaterial (5) strömt, wobei
das Trockenmaterial (5) in dem ersten Pfad (2C) in einer Region angeordnet ist, wo eine Luft konstant strömt, während die Klimaanlage in Betrieb ist,
ein erstes Gebläse (6) zum Zuführen der durch den ersten Lufteinlass (2a) angesaugten Luft zu einer Zuführungsöffnung einer Fahrzeugkabine hin in dem ersten Pfad (2C) bereitgestellt ist, und
ein erstes Ventil (41A) zum Bestimmen der Luftströmungen in den ersten Pfad (2C) aus einer Innenluft und der Außenluft stromaufwärts des ersten Gebläses (6) angeordnet ist, wobei die Innenluft eine Luft in der Fahrzeugkabine ist, wenn die Klimaanlage an dem Fahrzeug montiert ist,
**dadurch gekennzeichnet, dass** die Klimaanlage (1F) eine erste Kommunikationsöffnung (30) umfasst, die den ersten Strömungsweg (21A) mit dem zweiten Strömungsweg (31A) verbindet, wobei die Luft, die in den ersten Pfad (2C) hinein strömt, aus der Innenluft und der Außenluft durch das Öffnen und Schließen der Kommunikationsöffnung (30) in dem ersten Ventil (41A) bestimmt wird.

2. Klimaanlage für ein Fahrzeug nach Anspruch 1, wobei
das erste Ventil (41A) zwischen einer geschlossenen Stellung, die die erste Kommunikationsöffnung (30) schließt, und einer geöffneten Stellung, die die erste Kommunikationsöffnung (30) öffnet, schaltbar ist,
die gemischte Luft der Innenluft und der Außenluft in dem ersten Pfad (2C) strömt, wenn das erste Ventil (41A) in der geöffneten Stellung ist.

3. Klimaanlage für ein Fahrzeug nach Anspruch 2, wobei
der zweite Pfad (3A) mit dem Luftauslass (3b), einem zweiten Lufteinlass (3d), einem zweiten Gebläse (6), einem zweiten Ventil (42), einer zweiten Kommunikationsöffnung (35) und einem dritten Ventil (43) versehen ist,
der Luftauslass (3b) dem Auslassen der Luft, die in dem zweiten Pfad (3A) strömt, aus dem Fahrzeug heraus dient,
der zweite Lufteinlass (3d) dem Ansaugen der Innenluft dient,
das zweite Gebläse (6) dem Zuführen der Luft in dem zweiten Pfad (3A) zu dem Luftauslass hin dient,
das zweite Ventil (42) dem Bestimmen der zu dem Luftauslass (3b) hin zugeführten Luft aus der Innenluft und der Außenluft dient, wobei das zweite Ventil (42) zum Öffnen und Schließen des Lufteinlasses (3d) an dem zweiten Strömungsweg (31A) angeordnet ist,
die zweite Kommunikationsöffnung (35) zwischen dem zweiten Gebläse (6) und dem Luftauslass (3b) angeordnet ist und den zweiten Pfad (3A) mit dem ersten Pfad (2C) verbindet, und
das dritte Ventil (43) die zweite Kommunikationsöffnung (35) öffnet und schließt.

4. Klimaanlage für ein Fahrzeug nach einem der Ansprüche 1, 2 und 3, wobei
das Trockenmaterial (5) zwischen dem ersten Ventil (41A) und dem ersten Gebläse (6) in dem ersten Pfad (2C) angeordnet ist.

5. Klimaanlage für ein Fahrzeug nach einem der Ansprüche 1, 2
und 3, wobei
eine Temperatureinstelleinheit (10) zum Steuern der Temperatur der in dem ersten Pfad (2C) strömenden Luft an dem ersten Pfad (2C) angeordnet ist,
das Trockenmaterial (5) in der Region auf der Seite des ersten Lufteinlasses (2A) gegenüber der Temperatureinstelleinheit (10) in dem ersten Pfad (2C) in der Luftströmungsrichtung angeordnet ist.

6. Klimaanlage für ein Fahrzeug nach einem der Ansprüche 1 bis 5, wobei
das Trockenmaterial (5) über den ersten Pfad (2C) und den zweiten Pfad (3A) in einer Schnittpunktregion zwischen dem ersten Pfad (2C) und dem zweiten Pfad (3A) angeordnet ist.

## Revendications

1. Un climatiseur (1F) pour un véhicule comprenant :
un premier trajet (2C) présentant un premier trajet d'écoulement (21A) et un premier trajet d'alimentation (22A) à travers lequel s'écoule un air aspiré à travers une première admission d'air (2a) ;
un deuxième trajet (3A) présentant un deuxième trajet d'écoulement (31A) et un deuxième trajet d'alimentation (32A) à travers lequel s'écoule un air extérieur aspiré à travers une admission d'air extérieur (3a), l'air extérieur est un air extérieur d'un véhicule lorsque le climatiseur (1F) est monté sur le véhicule, le deuxième trajet d'alimentation (32A) présente une sortie d'air (3b) pour évacuer l'air vers l'extérieur du véhicule ; et
un matériau dessicant (5) disposé sur toute l'étendue du premier trajet (2C) et du deuxième trajet (3A), le premier trajet d'écoulement (21A) et le deuxième trajet d'écoulement (31A) étant situés en amont du matériau dessicant (5) dans le sens de l'écoulement d'air,
l'air extérieur s'écoule à travers le deuxième trajet (3A) en tant que fluide de régénération pour le matériau dessicant (5), dans lequel
le matériau dessicant (5) dans le premier trajet (2C) est disposé dans une région où un air s'écoule de manière constante pendant que le climatiseur est en fonctionnement,
un premier ventilateur (6) destiné à fournir l'air aspiré à travers la première admission d'air (2a) vers un orifice d'alimentation d'un habitacle de véhicule est prévu dans le premier trajet (2C), et
une première soupape (41A) destinée à déterminer que l'air s'écoule dans le premier trajet (2C) parmi un air intérieur et l'air extérieur est disposée en amont du premier ventilateur (6), l'air intérieur est un air dans l'habitacle du véhicule lorsque le climatiseur est monté sur le véhicule,
**caractérisé en ce que** le climatiseur (1F) comprend un premier orifice de communication (30) faisant communiquer le premier trajet d'écoulement (21A) avec le deuxième trajet d'écoulement (31A), l'écoulement d'air dans le premier trajet (2C) est déterminé parmi l'air intérieur et l'air extérieur par l'ouverture et la fermeture de l'orifice de communication (30) dans la première soupape (41A).

2. Le climatiseur pour un véhicule selon la revendication 1, dans lequel
la première soupape (41A) est commutable entre une position fermée fermant le premier orifice de communication (30) et une position ouverte ouvrant le premier orifice de communication (30),
l'air mélangé de l'air intérieur et de l'air extérieur s'écoule dans le premier trajet (2C) lorsque la première soupape (41A) est en position ouverte.

3. Le climatiseur pour un véhicule selon la revendication 2, dans lequel
le deuxième trajet (3A) est pourvu de la sortie d'air (3b), d'une deuxième admission d'air (3d), d'un deuxième ventilateur (6), d'une deuxième soupape (42), d'un deuxième orifice de communication (35) et d'une troisième soupape (43),
la sortie d'air (3b) est destinée à évacuer l'air circulant dans le deuxième trajet (3A) vers l'extérieur du véhicule,
la deuxième admission d'air (3d) est destinée à aspirer l'air intérieur,
le deuxième ventilateur (6) est destiné à fournir l'air dans le deuxième trajet (3A) vers la sortie d'air,
la deuxième soupape (42) est destinée à déterminer que l'air fourni vers la sortie d'air (3b) parmi l'air intérieur et l'air extérieur, la deuxième soupape (42) destinée à l'ouverture et la fermeture de l'admission d'air (3d) est disposée sur le deuxième trajet d'écoulement (31A),
le deuxième orifice de communication (35) est disposé entre le deuxième ventilateur (6) et la sortie d'air (3b) et fait communiquer le deuxième trajet (3A) avec le premier trajet (2C), et
la troisième soupape (43) ouvre et ferme le deuxième orifice de communication (35).

4. Le climatiseur pour un véhicule selon l'une quelconque des revendications 1, 2 et 3, dans lequel
le matériau dessicant (5) est disposé entre la première soupape (41A) et le premier ventilateur (6) dans le premier trajet (2C).

5. Le climatiseur pour un véhicule selon l'une quelconque des revendications 1, 2 et 3, dans lequel
une unité d'ajustement de température (10) destinée à réguler la température de l'air s'écoulant dans le premier trajet (2C) est disposée sur le premier trajet (2C),
le matériau dessicant (5) est disposé au niveau de la région sur le côté de première admission d'air (2a) par rapport à l'unité d'ajustement de température (10) dans le premier trajet (2C) dans le sens de l'écoulement d'air.

6. Le climatiseur pour un véhicule selon l'une quelconque des revendications 1 à 5, dans lequel
le matériau dessicant (5) est disposé sur toute l'étendue du premier trajet (2C) et du deuxième trajet (3A) au niveau d'une région d'intersection entre le premier trajet (2C) et le deuxième trajet (3A).
